(19) Europäisches Patentamt
European Patent Office
Office européen des brevets

(11) Publication number: **0 242 120 B1**

(12) # EUROPEAN PATENT SPECIFICATION

(45) Date of publication of patent specification: **30.10.91** (51) Int. Cl.⁵: **G02B 26/10**

(21) Application number: **87303053.0**

(22) Date of filing: **08.04.87**

(54) **Light scanning system.**

(30) Priority: **11.04.86 JP 84535/86**

(43) Date of publication of application:
**21.10.87 Bulletin 87/43**

(45) Publication of the grant of the patent:
**30.10.91 Bulletin 91/44**

(84) Designated Contracting States:
**DE FR GB**

(56) References cited:
**DE-A- 2 250 763** **DE-A- 2 834 085**
**DE-A- 2 917 163** **DE-A- 2 924 673**
**DE-A- 3 207 441** **DE-A- 3 440 157**
**US-A- 4 123 135**

**PATENT ABSTRACTS OF JAPAN, vol. 6, no. 104 (P-122)[982], 15th June 1982; & JP - A - 57 35824 (RICOH K.K.) 26-02-1982**

**PATENT ABSTRACTS OF JAPAN, vol. 8, no. 133 (P-281)[1570], 20th June 1984; & JP - A - 59 34512 (CANON K.K.) 24-02-184**

(73) Proprietor: **MATSUSHITA ELECTRIC INDUSTRIAL CO., LTD.**
**1006, Oaza Kadoma**
**Kadoma-shi, Osaka-fu, 571(JP)**

(72) Inventor: **Yamamoto, Yoshiharu**
**2-20-23, Miyayama-cho**
**Toyonaka-shi Osaka-fu, 560(JP)**
Inventor: **Kimura, Yuichi**
**6-7-12, Hishiyanishi**
**Higashiosaka-shi Osaka-fu, 577(JP)**

(74) Representative: **Crawford, Andrew Birkby et al**
**A.A. THORNTON & CO. Northumberland House 303-306 High Holborn**
**London WC1V 7LE(GB)**

EP 0 242 120 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a light scanning system for deflecting a light beam from a light source by means of a deflecting device, thereby scanning a scanning plane.

Description of the Prior Art

Conventionally, in a light scanning system using a deflecting device possessing a deflecting surface, such as rotating polygon mirror, various methods are known to prevent uneven pitches of scanning lines on the scanning plane even if the deflected and scanned light beam is changed within the plane perpendicular to the scanning plane due to tilting of the deflecting surface. For example, the light scanning systems disclosed in the Japanese Laid-open Patent Applications Nos. 56-36622, 57-144516, and U. S. Patents Nos. 3,750,189, 4,123,135 are comprised by a light source for obtaining a light beam collimated to a proper beam diameter, a first converging optical system composed of a single flat convex cylindrical lens for converging the light beam to a linear image, a deflecting device having a deflecting surface near the converging position of the linear image, and a second converging optical system composed of a single spherical lens and a single toric lens for converging the deflected light beam to a spot image on the scanning plane. The deflecting surface and the scanning plane are in a conjugate relation from geometrical optics within a plane perpendicular to the direction of scan, and the tilt of the deflecting surface is optically corrected, whereby uneven pitches of the scanning lines are corrected.

However, in the conventional light scanning systems, the aperture ratio is small, being 1:60 in the plane parallel to the direction of scan and 1:100 in the plane perpendicular to the direction of scan, and the spot diameter on the scanning plane of the light beam is about 100 $\mu$m. It corresponds to a resolution of only about 10 dots per 1 mm. To increase the aperture ratio while reducing the spot diameter, a sufficient aberration correction is needed. In the conventional light scanning system, the optical power in the plane perpendicular to the direction of scan of the second converging optical system must be strong in order to satisfy the conjugate relation from geometrical optics. Therefore, the spherical aberration in the plane perpendicular to the direction of scan is insufficiently corrected, and it is hard to increase the aperture ratio because the residual aberration is large, which is a great barrier for enhancement of resolution.

SUMMARY OF THE INVENTION

It is hence a primary object of this invention to present a light scanning system prosessing a high performance of favourably correcting and reducing the residual aberration, in particular, the spherical aberration in the plane perpendicular to the direction of scan.

The present invention provides a light scanning system for scanning a light beam in one direction, comprising:

a light source for emitting a light beam;

a first lens group having a unidirectional optical power in a plane perpendicular to the direction of scanning for converging the light beam emitted from the light source to form a line image;

a rotatable deflecting means having at least one deflecting surface for deflecting the converged light beam substantially at a position where the line image is formed; and

a second lens group for converging the light beam reflected from the deflecting surface of the deflecting means to form a light spot on a scanning plane, said second lens group constituting an anamorphic system having an optical power such that the deflecting surface and the scanning plane are in conjugate relationship to each other in the plane perpendicular to the direction of scanning, characterised in that said first lens group generates an over-corrected spherical aberration in the plane perpendicular to the direction of scanning so as to compensate an under-corrected spherical aberration which is generated by the second lens group in said plane perpendicular to the direction of scanning.

As a result, the residential aberration of the entire system is significantly decreased. It is hence possible to increase the aperture ratio, and to reduce the spot diameter on the scanning plane, so that a light scanning system suited to high printing quality can be realized.

BRIEF DESCRIPTION OF THE DRAWINGS

Fig. 1 is a perspective view showing a constitution of a first embodiment of a light scanning system of this invention;

Figs. 2 (a), (b) are schematic diagram showing an optical element arrangement in the plane parallel to the direction of scan and in the plane perpendicular to the direction of scan, respectively, of the first embodiment;

Figs. 3 (a), (b) are a schematic diagram showing an optical element arrangement in the plane parallel to the direction of scan and in the plane perpendicular to the direction of scan, respectively, of a second embodiment; and

Figs. 4 through 14 show characteristic curves of first through eleventh examples, in each of which (a) relates to the spherical aberration in the plane perpendicular to the direction of scan of the first converging optical system, (b) to the spherical aberration in the plane perpendicular to the direction of scan of the second converging optical system, (c) to the spherical aberration in the plane perpendicular to the direction of scan of the whole system, (d) to the astigmatism, and (e) to the characteristics of linearity of scan.

DESCRIPTION OF THE PREFERRED EMBODIMENTS

Fig. 1 is a perspective view showing a constitution of a first embodiment of a light scanning system of this invention. A laser light source 17 is composed of a laser oscillator 15 for generating a laser beam and a collimator lens 16 for obtaining a collimated light beam 1. This light beam 1 is linearly converged in the direction of scan in the vicinity of a deflecting surface 6, by means of a first converging optical system 5 composed of, sequentially from the light source end, a positive flat convex cylindrical lens 2, a negative flat concave cylindrical lens 3, and a positive flat convex cylindrical lens 4.

The deflecting surface 6 is one of the plural deflecting surfaces provided around a rotating polygon mirror 7. It is rotated by a motor (not shown) to deflect the light beam.

The light beam deflected by this deflecting surface 6 forms a scanning spot on a scanning plane 12 on a rotating photosensitive drum 18, by means of a second converging optical system 11 composed of two spherical lenses 8, 9 and a toric lens 10. Here, these two spherical lenses 8, 9 and the toric lens 10 are desired to have an external shape enough to keep at least the range to permit to pass the light beam so that the size of the light scanning system can be reduced as shown in Fig. 1.

Figs. 2 (a), (b) show an arrangement of the optical elements in the plane parallel to the direction of scan and in the plane perpendicular to the direction of scan, respectively, of the first embodiment. As shown in Fig. 2 (b), in the plane perpendicular to the direction of scan with respect to the second converging optical system 11, the deflecting surface 6 and the scanning surface 12 are in a conjugate relation from geometrical optics. Therefore, it possesses the function to correct the tilt of the deflecting surface. The second converging optical system having such function action has a greater optical power in the plane perpendicular to the direction of scan than that in the deflecting direction, so that an under-corrected spherical aberration occurs in the plane perpendicular to the direction of scan.

In this embodiment, as mentioned above, the first converging optical system consisting of the cylindrical lens group generates an over-corrected spherical aberration in the plane perpendicular to the direction of scan, so as to cancel the under-corrected spherical aberration generated in the second converging optical system. As a result, the spherical aberration of the entire system is notably reduced, so that it is possible to increase the aperture ratio.

Figs. 3 (a), (b) show an arrangement of the optical elements in the plane parallel to the direction of scan and in the plane perpendicular to the direction of scan, respectively, of a light scanning system according to a second embodiment of this invention. A first converging optical system 5 is composed of, sequentially from the light source end, a negative meniscus lens 13 having a convex surface directed to the light source end, and a positive flat convex cylindrical lens 14. It is designed to converge linearly in the vicinity of the deflecting surface 6 and, at the same time, generates an over-corrected spherical aberration.

A second converging optical system 11 is composed of a meniscus spherical lens 8 having a concave surface directed to the deflecting surface end, a meniscus spherical lens 9 having a convex surface directed to the deflecting surface end, and one toric lens 10, and it forms a scanning spot on the scanning plane 12. This second converging optical system generates an under-corrected spherical aberration in the plane perpendicular to the direction of scan, which is canceled by the over-corrected spherical aberration of the first converging optical system 5.

Incidentally, in Figs. 2 (a), (b) and Figs. 3 (a), (b), the symbols denote as follows:

$r_1, r_2, ..., r_m$ (m = 11 or 13): radius of curvature of each surface with respect to refraction in the plane parallel to the direction of scan;

$r'_1, r'_2, ..., r'_m$ (m = 11 or 13): radius of curvature of each surface with respective refraction in the plane perpendicular to the direction of scan;

$d_1, d_2, ..., d_{m-1}$ (m = 11 or 13): distance between each adjacent two surfaces; and

$n_1$, $n_2$, ..., $n_s$ (s = 5 or 6): refractive index of each lens at wave length of 790 nm.

Furthermore, by satisfying the following conditions, the characteristics can be further improved.

$3.8 < f_p/f_v < 5.0$ (1)

$0.2 < L/f < 0.4$ (2)

$-0.45 < f/r_a < 0.1$ (3)

where,

- f: focal length with respect to refraction in the plane parallel to the direction of scan of the entire system;
- $f_p$: focal length with respect to refraction in the plane parallel to the direction of scan of the second converging optical system;
- $f_v$: focal length with respect to refraction in the plane perpendicular to the direction of scan of the second converging optical system;
- L: overall length of the lenses of the second converging optical system; and
- $r_a$: radius of curvature with respect to refraction in the plane parallel to the direction of scan of the deflecting surface end plane of the third lens from the deflecting surface end of the second converging optical system

Condition (1) is to define the ratio of the focal length with respect to refraction in the plane parallel to the direction of scan to the focal length with respect to refraction in the plane perpendicular to the direction of scan of the second converging optical system. When exceeding the upper limit or lower limit, correction of astigmatism is difficult, which is barrier for realization of high performance.

Condition (2) is to define the overall length of the lenses of the second converging optical system. Below the lower limit, it may be advantageous for compact design, but correction of astigmatism becomes difficult. Above the upper limit, the overall length of the second converging optical system increases, and, accordingly, the aperture of the lens having toric plane increases, which may give rise to a significant cost increase.

Condition (3) is important for linearity of scanning. The second converging optical system, with respect to refraction in the plane parallel to the direction of scan, generates a negative distortion characteristic on the deflecting surface end plane of the third lens from the deflecting surface end, and produces a favorable linearity in the whole system. If the radius of curvature $r_a$ of this plane exceeds the upper limit or lower limit, it is hard to keep the linearity in excellent state.

Hereinafter, examples of practical designs are shown. Example 1 corresponds to the first embodiment shown in Figs. 2 (a), (b), and Examples 2 to 11 correspond to the second embodiment shown in Figs. 3 (a), (b).

Example 1

aperture ratio in the plane parallel to the direction of scan = 1:49

aperture ratio in the plane perpendicular to the direction of scan = 1:49

half deflecting angle = ± 33°

$f = 284.78$ $f_p/f_v = 4.15$

$L/f = 0.31$ $f/r_{12} = 0$

| | | | | |
|---|---|---|---|---|
| first converging means | $r_1 = \infty$ | $r_1' = 46.587$ | $d_1 = 2.40$ | $n_1 = 1.765299$ |
| | $r_2 = \infty$ | $r_2' = \infty$ | $d_2 = 14.28$ | |
| | $r_3 = \infty$ | $r_3' = -29.870$ | $d_3 = 2.20$ | $n_2 = 1.510516$ |
| | $r_4 = \infty$ | $r_4' = \infty$ | $d_4 = 33.89$ | |
| | $r_5 = \infty$ | $r_5' = 60.000$ | $d_5 = 3.00$ | $n_3 = 1.765299$ |
| | $r_6 = \infty$ | $r_6' = \infty$ | $d_6 = 51.35$ | |
| deflecting surface | $r_7 = \infty$ | $r_7' = \infty$ | $d_7 = 20.48$ | |
| second converging means | $r_8 = -70.606$ | $r_8' = -70.606$ | $d_8 = 17.28$ | $n_4 = 1.765299$ |
| | $r_9 = -77.654$ | $r_9' = -77.654$ | $d_9 = 0.66$ | |
| | $r_{10} = 354.042$ | $r_{10}' = 354.042$ | $d_{10} = 14.21$ | $n_5 = 1.532883$ |
| | $r_{11} = 431.786$ | $r_{11}' = 431.786$ | $d_{11} = 39.29$ | |
| | $r_{12} = \infty$ | $r_{12}' = -83.615$ | $d_{12} = 18.19$ | $n_6 = 1.674497$ |
| | $r_{13} = -230.766$ | $r_{13}' = -34.394$ | | |

Example 2

aperture ratio in the plane parallel to the direction of scan = 1:49

aperture ratio in the plane perpendicular to the direction of scan = 1:49

half deflecting angle = ± 33°

$f = 284.78$ $f_p/f_v = 4.15$

$L/f = 0.31$ $f/r_{10} = 0$

| | | | | |
|---|---|---|---|---|
| first converging means | $r_1 = \infty$ | $r_1' = 21.000$ | $d_1 = 4.00$ | $n_1 = 1.765299$ |
| | $r_2 = \infty$ | $r_2' = 17.545$ | $d_2 = 5.00$ | |
| | $r_3 = \infty$ | $r_3' = 47.389$ | $d_3 = 3.72$ | $n_2 = 1.765299$ |
| | $r_4 = \infty$ | $r_4' = \infty$ | $d_4 = 79.01$ | |
| deflecting means | $r_5 = \infty$ | $r_5' = \infty$ | $d_5 = 20.48$ | |
| seocnd converging means | $r_6 = -70.606$ | $r_6' = -70.606$ | $d_6 = 17.28$ | $n_3 = 1.765299$ |
| | $r_7 = -77.654$ | $r_7' = -77.654$ | $d_7 = 0.66$ | |
| | $r_8 = 354.042$ | $r_8' = 354.042$ | $d_8 = 14.21$ | $n_4 = 1.532883$ |
| | $r_9 = 431.786$ | $r_9' = 431.786$ | $d_9 = 39.29$ | |
| | $r_{10} = \infty$ | $r_{10}' = -83.615$ | $d_{10} = 18.19$ | $n_5 = 1.674497$ |
| | $r_{11} = -230.766$ | $r_{11}' = -34.394$ | | |

Example 3

aperture ratio in the plane parallel to the direction of scan = 1:50

aperture ratio in the plane perpendicular to the direction of scan = 1:50

half deflecting angle = ± 30°

f = 310.65 $f_p/f_v$ = 4.54

L/f = 0.28 $f/r_{10}$ = -0.17

| | | | | |
|---|---|---|---|---|
| first converging means | $r_1 = \infty$ | | $r_1' = 15.044$ | |
| | | $d_1 = 4.00$ | | $n_1 = 1.76530$ |
| | $r_2 = \infty$ | | $r_2' = 12.773$ | |
| | | $d_2 = 5.00$ | | |
| | $r_3 = \infty$ | | $r_3' = 48.842$ | |
| | | $d_3 = 3.72$ | | $n_2 = 1.76530$ |
| | $r_4 = \infty$ | | $r_4' = \infty$ | |
| | | $d_4 = 73.19$ | | |
| deflecting surface | $r_5 = \infty$ | | $r_5' = \infty$ | |
| | | $d_5 = 20.00$ | | |
| second converging means | $r_6 = -70.189$ | | $r_6' = -70.189$ | |
| | | $d_6 = 18.85$ | | $n_3 = 1.76530$ |
| | $r_7 = -77.471$ | | $r_7' = -77.471$ | |
| | | $d_7 = 10.00$ | | |
| | $r_8 = 369.975$ | | $r_8' = 369.975$ | |
| | | $d_8 = 6.15$ | | $n_4 = 1.53288$ |
| | $r_9 = 554.244$ | | $r_9' = 554.244$ | |
| | | $d_9 = 39.51$ | | |
| | $r_{10} = -1859.183$ | | $r_{10}' = -78.953$ | |
| | | $d_{10} = 12.34$ | | $n_5 = 1.67450$ |
| | $r_{11} = -227.419$ | | $r_{11}' = -33.306$ | |

Example 4

aperture ratio in the plane parallel to the direction of scan = 1:50

aperture ratio in the plane perpendicular to the direction of scan = 1:50

half deflecting angle = ± 30°

f = 287.66 $f_p/f_v$ = 4.13

L/f = 0.32 $f/r_{10}$ = 0

| | | | |
|---|---|---|---|
| first converging means | $r_1 = \infty$ | $r_1' = 38.410$ | |
| | $d_1 = 4.00$ | | $n_1 = 1.76530$ |
| | $r_2 = \infty$ | $r_2' = 26.065$ | |
| | $d_2 = 5.00$ | | |
| | $r_3 = \infty$ | $r_3' = 39.264$ | |
| | $d_3 = 3.72$ | | $n_2 = 1.765299$ |
| | $r_4 = \infty$ | $r_4' = \infty$ | |
| | $d_4 = 86.06$ | | |
| deflecting surface | $r_5 = \infty$ | $r_5' = \infty$ | |
| | $d_5 = 20.00$ | | |
| second converging means | $r_6 = -83.583$ | $r_6' = -83.583$ | |
| | $d_6 = 25.24$ | | $n_3 = 1.73759$ |
| | $r_7 = -87.678$ | $r_7' = -87.678$ | |
| | $d_7 = 10.00$ | | |
| | $r_8 = 336.361$ | $r_8' = 336.361$ | |
| | $d_8 = 6.00$ | | $n_4 = 1.76167$ |
| | $r_9 = 432.403$ | $r_9' = 432.403$ | |
| | $d_9 = 39.58$ | | |
| | $r_{10} = \infty$ | $r_{10}' = -65.724$ | |
| | $d_{10} = 12.00$ | | $n_5 = 1.60659$ |
| | $r_{11} = -286.512$ | $r_{11}' = -29.803$ | |

Example 5

aperture ratio in the plane parallel to the direction of scan = 1:50

aperture ratio in the plane perpendicular to the direction of scan = 1:50

half deflecting angle = ± 30°

$f = 287.87$ $f_p/f_v = 3.97$

$L/f = 0.30$ $f/r_{10} = 0$

| | | | | |
|---|---|---|---|---|
| first converging means | $r_1 = \infty$ | | $r_1' = 23.564$ | |
| | | $d_1 = 4.05$ | | $n_1 = 1.765299$ |
| | $r_2 = \infty$ | | $r_2' = 20.286$ | |
| | | $d_2 = 5.06$ | | |
| | $r_3 = \infty$ | | $r_3' = 54.574$ | |
| | | $d_3 = 3.77$ | | $n_2 = 1.765299$ |
| | $r_4 = \infty$ | | $r_4' = \infty$ | |
| | | $d_4 = 85.42$ | | |
| deflecting surface | $r_5 = \infty$ | | $r_5' = \infty$ | |
| | | $d_5 = 25.00$ | | |
| second converging means | $r_6 = -72.763$ | | $r_6' = -72.763$ | |
| | | $d_6 = 19.00$ | | $n_3 = 1.76167$ |
| | $r_7 = -77.288$ | | $r_7' = -77.288$ | |
| | | $d_7 = 10.00$ | | |
| | $r_8 = 643.375$ | | $r_8' = 643.375$ | |
| | | $d_8 = 11.15$ | | $n_4 = 1.5119$ |
| | $r_9 = 2849.379$ | | $r_9' = 2849.379$ | |
| | | $d_9 = 45.00$ | | |
| | $r_{10} = \infty$ | | $r_{10}' = -82.637$ | |
| | | $d_{10} = 6.00$ | | $n_5 = 1.67450$ |
| | $r_{11} = -306.407$ | | $r_{11}' = -34.194$ | |

Example 6

aperture ratio in the plane parallel to the direction of scan = 1:50

aperture ratio in the plane perpendicular to the direction of scan = 1:50

half deflecting angle = ± 30°

$f$ = 295.12 $f_p/f_v$ = 4.38

$L/f$ = 0.27 $f/r_{10}$ = -0.055

| | | | | |
|---|---|---|---|---|
| first converging means | $r_1 = \infty$ | | $r_1' = 23.636$ | |
| | | $d_1 = 4.55$ | | $n_1 = 1.76530$ |
| | $r_2 = \infty$ | | $r_2' = 20.007$ | |
| | | $d_2 = 5.68$ | | |
| | $r_3 = \infty$ | | $r_3' = 46.669$ | |
| | | $d_3 = 3.72$ | | $n_2 = 1.76530$ |
| | $r_4 = \infty$ | | $r_4' = \infty$ | |
| | | $d_4 = 71.86$ | | |
| deflecting surface | $r_5 = \infty$ | | $r_5' = \infty$ | |
| | | $d_5 = 20.00$ | | |
| second converging means | $r_6 = -65.003$ | | $r_6' = -65.003$ | |
| | | $d_6 = 8.01$ | | $n_3 = 1.78506$ |
| | $r_7 = -73.811$ | | $r_7' = -73.811$ | |
| | | $d_7 = 0.23$ | | |
| | $r_8 = 607.287$ | | $r_8' = 607.287$ | |
| | | $d_8 = 12.92$ | | $n_4 = 1.510516$ |
| | $r_9 = 407.327$ | | $r_9' = 407.327$ | |
| | | $d_9 = 39.47$ | | |
| | $r_{10} = -5379.689$ | | $r_{10}' = -117.403$ | |
| | | $d_{10} = 19.93$ | | $n_5 = 1.72367$ |
| | $r_{11} = -167.907$ | | $r_{11}' = -37.807$ | |

Example 7

aperture ratio in the plane parallel to the direction of scan = 1:50

aperture ratio in the plane perpendicular to the direction of scan = 1:50

half deflecting angle = ± 30°

$f$ = 288.01　　$f_p/f_v$ = 3.98

$L/f$ = 0.34　　$f/r_{10}$ = 0.014

| | | | | |
|---|---|---|---|---|
| first converging means | $r_1 = \infty$ | | $r_1' = 25.637$ | |
| | | $d_1 = 4.83$ | | $n_1 = 1.76530$ |
| | $r_2 = \infty$ | | $r_2' = 21.020$ | |
| | | $d_2 = 6.40$ | | |
| | $r_3 = \infty$ | | $r_3' = 48.017$ | |
| | | $d_3 = 4.50$ | | $n_2 = 1.76530$ |
| | $r_4 = \infty$ | | $r_4' = \infty$ | |
| | | $d_4 = 79.87$ | | |
| deflecting surface | $r_5 = \infty$ | | $r_5' = \infty$ | |
| | | $d_5 = 20.00$ | | |
| second converging means | $r_6 = -68.359$ | | $r_6' = -68.359$ | |
| | | $d_6 = 12.20$ | | $n_3 = 1.67450$ |
| | $r_7 = -78.902$ | | $r_7' = -78.902$ | |
| | | $d_7 = 1.74$ | | |
| | $r_8 = 740.172$ | | $r_8' = 740.172$ | |
| | | $d_8 = 23.55$ | | $n_4 = 1.65903$ |
| | $r_9 = 574.503$ | | $r_9' = 574.503$ | |
| | | $d_9 = 38.89$ | | |
| | $r_{10} = 20901.200$ | | $r_{10}' = -149.805$ | |
| | | $d_{10} = 20.94$ | | $n_5 = 1.63512$ |
| | $r_{11} = -161.094$ | | $r_{11}' = -38.452$ | |

Example 8

aperture ratio in the plane parallel to the direction of scan = 1:50

aperture ratio in the plane perpendicular to the direction of scan = 1:50

half deflecting angle = ± 30°

$f$ = 291.69    $f_p/f_v$ = 4.12

$L/f$ = 0.32    $f/r_{10}$ = 0

| | | | | | |
|---|---|---|---|---|---|
| first converging means | $r_1 = \infty$ | | $r_1' = 23.357$ | | |
| | | $d_1 = 4.83$ | | $n_1 = 1.76530$ |
| | $r_2 = \infty$ | | $r_2' = 21.316$ | |
| | | $d_2 = 6.40$ | | |
| | $r_3 = \infty$ | | $r_3' = 49.817$ | |
| | | $d_3 = 4.50$ | | $n_2 = 1.76530$ |
| | $r_4 = \infty$ | | $r_4' = \infty$ | |
| | | $d_4 = 77.99$ | | |
| deflecting surface | $r_5 = \infty$ | | $r_5' = \infty$ | |
| | | $d_5 = 20.00$ | | |
| second converging means | $r_6 = -67.946$ | | $r_6' = -67.946$ | |
| | | $d_6 = 11.05$ | | $n_3 = 1.76167$ |
| | $r_7 = -78.402$ | | $r_7' = -78.402$ | |
| | | $d_7 = 2.66$ | | |
| | $r_8 = 743.300$ | | $r_8' = 743.300$ | |
| | | $d_8 = 22.88$ | | $n_4 = 1.65903$ |
| | $r_9 = 542.759$ | | $r_9' = 542.759$ | |
| | | $d_9 = 37.26$ | | |
| | $r_{10} = \infty$ | | $r_{10}' = -146.768$ | |
| | | $d_{10} = 19.73$ | | $n_5 = 1.67450$ |
| | $r_{11} = -165.713$ | | $r_{11}' = -39.239$ | |

Example 9

aperture ratio in the plane parallel to the direction of scan = 1:50

aperture ratio in the plane perpendicular to the direction of scan = 1:50

half deflecting angle = ± 30°

$f$ = 287.89 $f_p/f_v$ = 4.24

$L/f$ = 0.30 $f/r_{10}$ = -0.27

| | | | |
|---|---|---|---|
| first converging means | $r_1 = \infty$ | $r_1' = 20.956$ | |
| | $d_1 = 4.00$ | | $n_1 = 1.76530$ |
| | $r_2 = \infty$ | $r_2' = 17.812$ | |
| | $d_2 = 5.00$ | | |
| | $r_3 = \infty$ | $r_3' = 46.210$ | |
| | $d_3 = 3.72$ | | $n_2 = 1.76530$ |
| | $r_4 = \infty$ | $r_4' = \infty$ | |
| | $d_4 = 72.19$ | | |
| deflecting surface | $r_5 = \infty$ | $r_5' = \infty$ | |
| | $d_5 = 20.48$ | | |
| second converging means | $r_6 = -68.143$ | $r_6' = -68.143$ | |
| | $d_6 = 20.64$ | | $n_3 = 1.78506$ |
| | $r_7 = -80.684$ | $r_7' = -80.684$ | |
| | $d_7 = 6.77$ | | |
| | $r_8 = 918.262$ | $r_8' = 918.262$ | |
| | $d_8 = 7.38$ | | $n_4 = 1.53288$ |
| | $r_9 = -4001.818$ | $r_9' = -4001.818$ | |
| | $d_9 = 37.59$ | | |
| | $r_{10} = -1047.105$ | $r_{10}' = -85.234$ | |
| | $d_{10} = 14.29$ | | $n_5 = 1.67450$ |
| | $r_{11} = -195.914$ | $r_{11}' = -34.629$ | |

Example 10

aperture ratio in the plane parallel to the direction of scan = 1:50

aperture ratio in the plane perpendicular to the direction of scan = 1:50

half deflecting angle = ± 30°

$f$ = 287.69 $f_p/f_v$ = 4.49

$L/f$ = 0.28 $f/r_{10}$ = -0.39

| | | | | |
|---|---|---|---|---|
| first converging means | $r_1 = \infty$ | $r_1' = 21.193$ | | |
| | | | $d_1 = 4.00$ | $n_1 = 1.76530$ |
| | $r_2 = \infty$ | $r_2' = 17.851$ | | |
| | | | $d_2 = 5.00$ | |
| | $r_3 = \infty$ | $r_3' = 41.662$ | | |
| | | | $d_3 = 3.72$ | $n_2 = 1.76530$ |
| | $r_4 = \infty$ | $r_4' = \infty$ | | |
| | | | $d_4 = 65.06$ | |
| deflecting surface | $r_5 = \infty$ | $r_5' = \infty$ | | |
| | | | $d_5 = 20.48$ | |
| second converging means | $r_6 = -65.855$ | $r_6' = -65.855$ | | |
| | | | $d_6 = 22.11$ | $n_3 = 1.78506$ |
| | $r_7 = -82.458$ | $r_7' = -82.458$ | | |
| | | | $d_7 = 0.00$ | |
| | $r_8 = 11290.889$ | $r_8' = 11290.889$ | | |
| | | | $d_8 = 9.89$ | $n_4 = 1.78506$ |
| | $r_9 = -1046.936$ | $r_9' = -1046.936$ | | |
| | | | $d_9 = 34.50$ | |
| | $r_{10} = -746.887$ | $r_{10}' = -78.255$ | | |
| | | | $d_{10} = 15.00$ | $n_5 = 1.78506$ |
| | $r_{11} = -192.977$ | $r_{11}' = -36.101$ | | |

**Example 11**

aperture ratio in the plane parallel to the direction of scan = 1:50

aperture ratio in the plane perpendicular to the direction of scan = 1:50

half deflecting angle = ± 30°

$f$ = 287.66 $f_p/f_v$ = 4.35

$L/f$ = 0.30 $f/r_{10}$ = 0

| | | | | |
|---|---|---|---|---|
| first converging means | $r_1$ = ∞ | $r_1'$ = 21.004 | | |
| | | | $d_1$ = 4.00 | $n_1$ = 1.76530 |
| | $r_2$ = ∞ | $r_2'$ = 17.845 | | |
| | | | $d_2$ = 5.00 | |
| | $r_3$ = ∞ | $r_3'$ = 45.422 | | |
| | | | $d_3$ = 3.72 | $n_2$ = 1.76530 |
| | $r_4$ = ∞ | $r_4'$ = ∞ | | |
| | | | $d_4$ = 70.73 | |
| | $r_5$ = ∞ | $r_5'$ = ∞ | | |
| deflecting surface | | | $d_5$ = 20.48 | |
| second converging means | $r_6$ = -68.363 | $r_6'$ = -68.363 | | |
| | | | $d_6$ = 16.61 | $n_3$ = 1.78506 |
| | $r_7$ = -77.695 | $r_7'$ = -77.695 | | |
| | | | $d_7$ = 0.00 | |
| | $r_8$ = 11425.394 | $r_8'$ = 11425.394 | | |
| | | | $d_8$ = 17.01 | $n_4$ = 1.78506 |
| | $r_9$ = -8531.994 | $r_9'$ = -8531.994 | | |
| | | | $d_9$ = 35.96 | |
| | $r_{10}$ = ∞ | $r_{10}'$ = -89.050 | | |
| | | | $d_{10}$ = 16.53 | $n_5$ = 1.67450 |
| | $r_{11}$ = -208.951 | $r_{11}'$ = -34.131 | | |

Figs. 4 through 14 show characteristic curves of the above Examples 1 through 11, in each of which (a) relates to the spherical aberration in the plane perpendicular to the direction of scan of the first converging optical system, (b) to the spherical aberration in the plane perpendicular to the direction of scan of the second converging optical system, (c) to the spherical aberration in the plane perpendicular to the direction of scan of the whole system, (d) to the astigmatism, and (e) to the characteristics of linearity of scan. Further, F denotes F number, ω denotes half deflecting angle, S denotes sagittal aberration, and M denotes meridional aberration.

As apparent from Figs. 4 through 14, the residual aberration of the whole system is remarkably corrected, the aperture ratio is large, the deflecting angle is large, and the title correction function is effected. As the result, the light scanning system of the invention can realize a highly accurate converging performance with a simple structure.

## Claims

**1.** A light scanning system for scanning a light beam in one direction, comprising:

a light source (17) for emitting a light beam;

a first lens group (5) having a unidirectional optical power in a plane perpendicular to the direction of scanning for converging the light beam emitted from the light source to form a line image;

a rotatable deflecting means (7) having at least one deflecting surface (6) for deflecting the converged light beam substantially at a position where the line image is formed; and

a second lens group (11) for converging the light beam reflected from the deflecting surface of the deflecting means to form a light spot on a scanning plane (12), said second lens group constituting an anamorphic system having an optical power such that the deflecting surface and the scanning plane are in conjugate relationship to each other in the plane perpendicular to the direction of scanning, characterised in that said first lens group (5) generates an over-corrected spherical aberration in the plane perpendicular to the direction of scanning so as to compensate an under-corrected spherical aberration which is generated by the second lens group (11) in said plane perpendicular to the direction of scanning.

**2.** The system of claim 1, wherein the first lens group (5) comprises a positive cylindrical first lens (2), a negative cylindrical second lens (3) and a positive cylindrical third lens (4), which are arranged in the order from the light source (17) end.

**3.** The system of claim 1, wherein the first lens group (5) comprises a meniscus negative cylindrical first lens (13) with one convex surface facing the light source and a positive cylindrical second lens (14), which are arranged in the order from the light source (17) end.

**4.** The system of claim 1, wherein the second lens group (11) comprises a spherical first lens (18), a spherical second lens (19) and a third lens (10) having at last a toric surface, which are arranged in the order from the deflecting surface (16) end.

**5.** The system of claim 1, wherein the second lens group (11) comprises a meniscus first lens (8) with one concave surface facing the deflecting surface, a meniscus second lens (9) with one convex surface facing the first lens and a third lens (10) having at least a toric surface, which are arranged in the order from the deflecting surface (6) end.

**6.** The system of claim 1, satisfying substantially the following conditions:

$3.8 < f_p/f_v < 5.0$
$0.2 < L/f < 0.4$
$-0.45 < f/r_a < 0.1$

where f denotes a focal length of the light scanning system with respect to refraction in a plane parallel to the direction of scan; fp, a focal length of the second lens group (11) with respect to refraction in the plane parallel to the direction of scan; fv, a focal length of the second lens group (11) with respect to refraction in the plane perpendicular to the direction of scan; L, a length of the second lens group (11); and $r_a$, a radius of curvature in the plane parallel to the direction of scan of a surface directing to the deflecting surface of a lens at the scanning plane end of the second lens group (11).

**7.** The system of claim 1, having an aperture ratio of 1:49 in a plane parallel to the direction of scan, an aperture ratio of 1:49 in the plane perpendicular to the direction of scan and a half deflecting angle of 33°, wherein the first lens group (5) comprises first (2), second (3) and third (4) lenses which are arranged in the order from the light source (17) end, and the second lens group (11) comprises fourth (8), fifth (9) and sixth (10) lenses which are arranged in the order from the deflecting surface (6) end, and wherein the system satisfies substantially the following conditions:

| | |
|---|---|
| $f = 284.78$ | $f_p/f_v = 4.15$ |
| $L/f = 0.31$ | $f/r_{12} = 0$ |

| | | | | |
|---|---|---|---|---|
| first converging means | $r_1 = \infty$ | $r_1' = 46.587$ | $d_1 = 2.40$ | $n_1 = 1.765299$ |
| | $r_2 = \infty$ | $r_2' = \infty$ | $d_2 = 14.28$ | |
| | $r_3 = \infty$ | $r_3' = -29.870$ | $d_3 = 2.20$ | $n_2 = 1.510516$ |
| | $r_4 = \infty$ | $r_4' = \infty$ | $d_4 = 33.89$ | |
| | $r_5 = \infty$ | $r_5' = 60.000$ | $d_5 = 3.00$ | $n_3 = 1.765299$ |
| | $r_6 = \infty$ | $r_6' = \infty$ | $d_6 = 51.35$ | |
| deflecting surface | $r_7 = \infty$ | $r_7' = \infty$ | $d_7 = 20.48$ | |
| second converging means | $r_8 = -70.606$ | $r_8' = -70.606$ | $d_8 = 17.28$ | $n_4 = 1.765299$ |
| | $r_9 = -77.654$ | $r_9' = -77.654$ | $d_9 = 0.66$ | |
| | $r_{10} = 354.042$ | $r_{10}' = 354.042$ | $d_{10} = 14.21$ | $n_5 = 1.532883$ |
| | $r_{11} = 431.786$ | $r_{11}' = 431.786$ | $d_{11} = 39.29$ | |
| | $r_{12} = \infty$ | $r_{12}' = -83.615$ | $d_{12} = 18.19$ | $n_6 = 1.674497$ |
| | $r_{13} = -230.766$ | $r_{13}' = -34.394$ | | |

where f denotes a focal length of the system with respect to refraction in the plane parallel to the direction of scan; fp, a focal length of the second lens group (11) with respect to the refraction in the plane parallel to the direction of scan; $f_v$, a focal length of the second lens group (11) with respect to refraction in the plane perpendicular to the direction of the scan; L, a length of the second lens group (11); $r_1$ through $r_{13}$, a radius of curvature with respect to refraction in the plane parallel to the direction of scan of each of the surfaces in the order from the light source end: $r_1'$ through $r_{13}'$, a radius of curvature with respect to refraction in the plane perpendicular to the direction of scan of each of the surfaces in the order from the light source end; $d_1$ through $d_{12}$, a distance between each adjacent two of the surfaces in the order from the light source end; and $n_1$ through $n_6$, an index of refraction at a wave length of 790 nm of each of the lenses in the order from the light source end.

**8.** The system of claim 1, having an aperture ratio of 1:49 in a plane parallel to the direction of scan, an aperture ratio of 1:49 in the plane perpendicular to the direction of scan and a half deflecting angle of 33°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (16) end, and wherein the system satisfies substantially the following conditions:

$f = 284.78$ $\quad f_p/f_v = 4.15$

$L/f = 0.31$ $\quad f/r_{10} = 0$

| | | | | |
|---|---|---|---|---|
| first converging means | $r_1 = \infty$ | $r_1' = 21.000$ | $d_1 = 4.00$ | $n_1 = 1.765299$ |
| | $r_2 = \infty$ | $r_2' = 17.545$ | $d_2 = 5.00$ | |
| | $r_3 = \infty$ | $r_3' = 47.389$ | $d_3 = 3.72$ | $n_2 = 1.765299$ |
| | $r_4 = \infty$ | $r_4' = \infty$ | $d_4 = 79.01$ | |
| deflecting means | $r_5 = \infty$ | $r_5' = \infty$ | $d_5 = 20.48$ | |
| seocnd converging means | $r_6 = -70.606$ | $r_6' = -70.606$ | $d_6 = 17.28$ | $n_3 = 1.765299$ |
| | $r_7 = -77.654$ | $r_7' = -77.654$ | $d_7 = 0.66$ | |
| | $r_8 = 354.042$ | $r_8' = 354.042$ | $d_8 = 14.21$ | $n_4 = 1.532883$ |
| | $r_9 = 431.786$ | $r_9' = 431.786$ | $d_9 = 39.29$ | |
| | $r_{10} = \infty$ | $r_{10}' = -83.615$ | $d_{10} = 18.19$ | $n_5 = 1.674497$ |
| | $r_{11} = -230.766$ | $r_{11}' = -34.394$ | | |

where f denotes a focal length of the system with respect to refraction in the plane parallel to the direction of scan; $f_p$, a focal length of the second lens group (11) with respect to refraction in the plane parallel to the direction of scan; $f_v$, a focal length of the second lens group (11) with respect to refraction in the plane perpendicular to the direction of scan; L, a length of the second lens group (11); $r_1$ through $r_{11}$, a radius of curvature with respect to refraction in the plane parallel to the direction of the scan of each of the surfaces in the order from the light source end; $r_1'$ through $r_{11}'$, a radius of curvature with respect to refraction in the plane perpendicular to the direction of scan of each of the surfaces in the order from the light source end; $d_1$ and $d_{10}$, a distance between each adjacent two of the surfaces in the order from the light source end; and $n_1$ through $n_5$, an index of refraction at a wave length of 790 nm of each of the lenses in the order from the light source end.

**9.** The system of claim 1, having an aperture ratio of 1:50 in a plane parallel to the direction of scan, an aperture ratio of 1:50 in the plane perpendicular to the direction of scan and a half deflecting angle of 30°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (6) end, and wherein the system satisfies substantially the following conditions:

$f = 310.65$ $\quad f_p/f_v = 4.54$

$L/f = 0.28$ $\quad f/r_{10} = -0.17$

| | | | |
|---|---|---|---|
| first converging means | $r_1 = \infty$ | $r_1' = 15.044$ | |
| | $d_1 = 4.00$ | | $n_1 = 1.76530$ |
| | $r_2 = \infty$ | $r_2' = 12.773$ | |
| | $d_2 = 5.00$ | | |
| | $r_3 = \infty$ | $r_3' = 48.842$ | |
| | $d_3 = 3.72$ | | $n_2 = 1.76530$ |
| | $r_4 = \infty$ | $r_4' = \infty$ | |
| | $d_4 = 73.19$ | | |
| deflecting surface | $r_5 = \infty$ | $r_5' = \infty$ | |
| | $d_5 = 20.00$ | | |
| second converging means | $r_6 = -70.189$ | $r_6' = -70.189$ | |
| | $d_6 = 18.85$ | | $n_3 = 1.76530$ |
| | $r_7 = -77.471$ | $r_7' = -77.471$ | |
| | $d_7 = 10.00$ | | |
| | $r_8 = 369.975$ | $r_8' = 369.975$ | |
| | $d_8 = 6.15$ | | $n_4 = 1.53288$ |
| | $r_9 = 554.244$ | $r_9' = 554.244$ | |
| | $d_9 = 39.51$ | | |
| | $r_{10} = -1859.183$ | $r_{10}' = -78.953$ | |
| | $d_{10} = 12.34$ | | $n_5 = 1.67450$ |
| | $r_{11} = -227.419$ | $r_{11}' = -33.306$ | |

where f denotes a focal length of the system with respect to refraction in the plane parallel to the direction of scan; $f_p$, a focal length of the second lens group (11) with respect to refraction in the plane parallel to the direction of scan; $f_v$, a focal length of the second lens group (11) with respect to refraction in the plane perpendicular to the direction of scan; L, a length of the second lens group (11); $r_1$ through $r_{11}$, a radius of curvature with respect to refraction in the plane parallel to the direction of scan of each of the surfaces in the order from the light source end; $r_1'$ through $r_{11}'$, a radius of

curvature with respect to refraction in the plane perpendicular to the direction of scan of each of the surfaces in the order from the light source end; $d_1$ through $d_{10}$, a distance between each adjacent two of the surfaces in the order from the light source end; and $n_1$ through $n_5$, an index of refraction at a wave length of 790 nm of each of the lenses in the order from the light source end.

**10.** The system of claim 1, having an aperture ratio 1:50 in a plane parallel to the direction of scan, an aperture ratio of 1:50 in the plane perpendicular to the direction of scan and a half deflecting angle 30°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (6) end, and wherein the system satisfies substantially the following conditions:

$f = 287.66$ $\qquad f_p/f_v = 4.13$

$L/f = 0.32$ $\qquad f/r_{10} = 0$

| | | | | |
|---|---|---|---|---|
| first converging means | $r_1 = \infty$ | | $r_1' = 38.410$ | |
| | | $d_1 = 4.00$ | | $n_1 = 1.76530$ |
| | $r_2 = \infty$ | | $r_2' = 26.065$ | |
| | | $d_2 = 5.00$ | | |
| | $r_3 = \infty$ | | $r_3' = 39.264$ | |
| | | $d_3 = 3.72$ | | $n_2 = 1.765299$ |
| | $r_4 = \infty$ | | $r_4' = \infty$ | |
| | | $d_4 = 86.06$ | | |
| deflecting surface | $r_5 = \infty$ | | $r_5' = \infty$ | |

second converging means

$$\left\{\begin{array}{llll} & d_5 = 20.00 & & \\ r_6 = -83.583 & & r_6' = -83.583 & \\ & d_6 = 25.24 & & n_3 = 1.73759 \\ r_7 = -87.678 & & r_7' = -87.678 & \\ & d_7 = 10.00 & & \\ r_8 = 336.361 & & r_8' = 336.361 & \\ & d_8 = 6.00 & & n_4 = 1.76167 \\ r_9 = 432.403 & & r_9' = 432.403 & \\ & d_9 = 39.58 & & \\ r_{10} = \infty & & r_{10}' = -65.724 & \\ & d_{10} = 12.00 & & n_5 = 1.60659 \\ r_{11} = -286.512 & & r_{11}' = -29.803 & \end{array}\right.$$

where f denotes a focal length of the system with respect to refraction in the plane parallel to the direction of scan; $f_p$, a focal length of the second lens group (11) with respect to refraction in the plane parallel to the direction of scan; $f_v$, a focal length of the second lens group (11) with respect to refraction in the plane perpendicular to the direction of scan; L, a length of the second lens group (11); $r_1$ through $r_{11}$, a radius of curvature with respect to refraction in the plane parallel to the direction of scan of each of the surfaces in the order from the light source end; $r_1'$ through $r_{11}'$, a radius of curvature with respect to refraction in the plane perpendicular to the direction of scan of each of the surfaces in the order from the light source end; $d_1$ through $d_{10}$, a distance between each adjacent two of the surfaces in the order from the light source end; and $n_1$ through $n_5$, an index of refraction at a wave length of 790 nm of each of the lenses in the order from the light source end.

**11.** The system of claim 1, having an aperture ratio of 1:50 in a plane parallel to the direction of scan, an aperture ratio of 1:50 in the plane perpendicular to the direction of scan and a half deflecting angle of 30°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (6) end, and wherein the system satisfies substantially the following conditions:

$f = 287.87$ $f_p/f_v = 3.97$

$L/f = 0.30$ $f/r_{10} = 0$

| | | | | |
|---|---|---|---|---|
| first converging means | $r_1 = \infty$ | | $r_1' = 23.564$ | |
| | | $d_1 = 4.05$ | | $n_1 = 1.765299$ |
| | $r_2 = \infty$ | | $r_2' = 20.286$ | |
| | | $d_2 = 5.06$ | | |
| | $r_3 = \infty$ | | $r_3' = 54.574$ | |
| | | $d_3 = 3.77$ | | $n_2 = 1.765299$ |
| | $r_4 = \infty$ | | $r_4' = \infty$ | |
| | | $d_4 = 85.42$ | | |
| deflecting surface | $r_5 = \infty$ | | $r_5' = \infty$ | |
| | | $d_5 = 25.00$ | | |
| second converging means | $r_6 = -72.763$ | | $r_6' = -72.763$ | |
| | | $d_6 = 19.00$ | | $n_3 = 1.76167$ |
| | $r_7 = -77.288$ | | $r_7' = -77.288$ | |
| | | $d_7 = 10.00$ | | |
| | $r_8 = 643.375$ | | $r_8' = 643.375$ | |
| | | $d_8 = 11.15$ | | $n_4 = 1.5119$ |
| | $r_9 = 2849.379$ | | $r_9' = 2849.379$ | |
| | | $d_9 = 45.00$ | | |
| | $r_{10} = \infty$ | | $r_{10}' = -82.637$ | |
| | | $d_{10} = 6.00$ | | $n_5 = 1.67450$ |
| | $r_{11} = -306.407$ | | $r_{11}' = -34.194$ | |

where f denotes a focal length of the system with respect to refraction in the plane parallel to the direction of scan; $f_p$, a focal length of the second lens group (11) with respect to refraction in the plane parallel to the direction of scan; $f_v$, a focal length of the second lens group (11) with respect to refraction in the plane perpendicular to the direction of scan; L, a length of the second lens group (11); $r_1$ through $r_{11}$, a radius of curvature with respect to refraction in the plane parallel to the direction of scan of each of the surfaces in the order from the light source end; $r_1'$ through $r_{11}'$, a radius of curvature with respect to refraction in the plane perpendicular to the direction of scan of each of the surfaces in the order from the light source end; $d_1$ through $d_{10}$, a distance between each adjacent two of the surfaces in the order from the light source end; and $n_1$ through $n_5$, an index of refraction at a wave length of 790 nm of each of the lenses in the order from the light source end.

**12.** The system of claim 1, having an aperture ratio of 1:50 in a plane parallel to the direction of scan, an aperture ratio of 1:50 in the plane perpendicular to the direction of scan and a half deflecting angle of 30°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (6) end, and wherein the system satisfies substantially the following conditions:

$f = 295.12$ $\qquad f_p/f_v = 4.38$

$L/f = 0.27$ $\qquad f/r_{10} = -0.055$

first converging means:

$r_1 = \infty$ $\qquad r_1' = 23.636$

$d_1 = 4.55$ $\qquad n_1 = 1.76530$

$r_2 = \infty$ $\qquad r_2' = 20.007$

$d_2 = 5.68$

$r_3 = \infty$ $\qquad r_3' = 46.669$

$d_3 = 3.72$ $\qquad n_2 = 1.76530$

$r_4 = \infty$ $\qquad r_4' = \infty$

$d_4 = 71.86$

deflecting surface: $r_5 = \infty$ $\qquad r_5' = \infty$

$d_5 = 20.00$

second converging means

$$
\left\{
\begin{array}{llll}
r_6 = -65.003 & & r_6' = -65.003 & \\
 & d_6 = 8.01 & & n_3 = 1.78506 \\
r_7 = -73.811 & & r_7' = -73.811 & \\
 & d_7 = 0.23 & & \\
r_8 = 607.287 & & r_8' = 607.287 & \\
 & d_8 = 12.92 & & n_4 = 1.510516 \\
r_9 = 407.327 & & r_9' = 407.327 & \\
 & d_9 = 39.47 & & \\
r_{10} = -5379.689 & & r_{10}' = -117.403 & \\
 & d_{10} = 19.93 & & n_5 = 1.72367 \\
r_{11} = -167.907 & & r_{11}' = -37.807 &
\end{array}
\right.
$$

where f denotes a focal length of the system with respect to the refraction in the plane parallel to the direction of scan; $f_p$, a focal length of the second lens group (11) with respect to refraction in the plane parallel to the direction of scan; $f_v$, a focal length of the second lens group (11) with respect to refraction in the plane perpendicular to the direction of scan; L, a length of the second lens group (11); $r_1$ through $r_{11}$, a radius of curvature with respect to refraction in the plane parallel to the direction of scan of each of the surfaces in the order from the light source end; $r_1'$ through $r_{11}'$, a radius of curvature with respect to refraction in the plane perpendicular to the direction of scan of each of the surfaces in the order from the light source end; $d_1$ through $d_{10}$, a distance between each adjacent two of the surfaces in the order from the light source end; and $n_1$ through $n_5$, an index of refraction at a wave length of 790 nm of each of the lenses in the order from the light source end.

**13.** The system of claim 1, having an aperture ratio of 1:50 in a plane parallel to the direction of scan, an aperture ratio of 1:50 in the plane perpendicular to the direction of scan and a half deflecting angle of 30°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (6) end, and wherein the system satisfies substantially the following conditions:

$f = 288.01$ $f_p/f_v = 3.98$

$L/f = 0.34$ $f/r_{10} = 0.014$

| | | | | |
|---|---|---|---|---|
| first converging means | $r_1 = \infty$ | | $r_1' = 25.637$ | |
| | | $d_1 = 4.83$ | | $n_1 = 1.76530$ |
| | $r_2 = \infty$ | | $r_2' = 21.020$ | |
| | | $d_2 = 6.40$ | | |
| | $r_3 = \infty$ | | $r_3' = 48.017$ | |
| | | $d_3 = 4.50$ | | $n_2 = 1.76530$ |
| | $r_4 = \infty$ | | $r_4' = \infty$ | |
| | | $d_4 = 79.87$ | | |
| deflecting surface | $r_5 = \infty$ | | $r_5' = \infty$ | |
| | | $d_5 = 20.00$ | | |
| second converging means | $r_6 = -68.359$ | | $r_6' = -68.359$ | |
| | | $d_6 = 12.20$ | | $n_3 = 1.67450$ |
| | $r_7 = -78.902$ | | $r_7' = -78.902$ | |
| | | $d_7 = 1.74$ | | |
| | $r_8 = 740.172$ | | $r_8' = 740.172$ | |
| | | $d_8 = 23.55$ | | $n_4 = 1.65903$ |
| | $r_9 = 574.503$ | | $r_9' = 574.503$ | |
| | | $d_9 = 38.89$ | | |
| | $r_{10} = 20901.200$ | | $r_{10}' = -149.805$ | |
| | | $d_{10} = 20.94$ | | $n_5 = 1.63512$ |
| | $r_{11} = -161.094$ | | $r_{11}' = -38.452$ | |

where f denotes a focal length of the system with respect to refraction in the plane parallel to the direction of scan; $f_p$, a focal length of the second lens group (11) with respect to refraction in the plane parallel to the direction of scan; $f_v$, a focal length of the second lens group (11) with respect to refraction in the plane perpendicular to the direction of scan; L, a length of the second lens group (11); $r_1$ through $r_{11}$, a radius of curvature with respect to refraction in the plane parallel to the direction of scan of each of the surfaces in the order from the light source end; $r_1'$ through $r_{11}'$ a radius of curvature with respect to refraction in the plane perpendicular to the direction of scan of each of the surfaces in the order from the light source end; d1 through $d_{10}$, a distance between each adjacent two of the surfaces in the order from the light source end; and $n_1$ through $n_5$, an index of refraction at a wave length of 790nm of each of the lenses in the order from the light source end.

**14.** The system of claim 1, having an aperture ratio of 1:50 in a plane parallel to the direction of scan, an aperture ratio of 1:50 in the plane perpendicular to the direction of scan and a half deflecting angle of 30°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (6) end, and wherein the system satisfies substantially the following conditions:

$f = 291.69$ $\qquad f_p/f_v = 4.12$

$L/f = 0.32$ $\qquad f/r_{10} = 0$

| | | | | |
|---|---|---|---|---|
| first converging means | $r_1 = \infty$ | | $r_1' = 23.357$ | |
| | | $d_1 = 4.83$ | | $n_1 = 1.76530$ |
| | $r_2 = \infty$ | | $r_2' = 21.316$ | |
| | | $d_2 = 6.40$ | | |
| | $r_3 = \infty$ | | $r_3' = 49.817$ | |
| | | $d_3 = 4.50$ | | $n_2 = 1.76530$ |
| | $r_4 = \infty$ | | $r_4' = \infty$ | |
| | | $d_4 = 77.99$ | | |
| deflecting surface | $r_5 = \infty$ | | $r_5' = \infty$ | |
| | | $d_5 = 20.00$ | | |

| | | | | |
|---|---|---|---|---|
| second converging means | $r_6$ = -67.946 | | $r_6$' = -67.946 | |
| | | $d_6$ = 11.05 | | $n_3$ = 1.76167 |
| | $r_7$ = -78.402 | | $r_7$' = -78.402 | |
| | | $d_7$ = 2.66 | | |
| | $r_8$ = 743.300 | | $r_8$' = 743.300 | |
| | | $d_8$ = 22.88 | | $n_4$ = 1.65903 |
| | $r_9$ = 542.759 | | $r_9$' = 542.759 | |
| | | $d_9$ = 37.26 | | |
| | $r_{10}$ = $\infty$ | | $r_{10}$' = -146.768 | |
| | | $d_{10}$ = 19.73 | | $n_5$ = 1.67450 |
| | $r_{11}$ = -165.713 | | $r_{11}$' = -39.239 | |

where f denotes a focal length of the system with respect to refraction in the plane parallel to he direction of scan; $f_p$, a focal length of the second lens group (11) with respect to refraction in the plane parallel to the direction of scan; $f_v$, a focal length of the second lens group (11) with respect to refraction in the plane perpendicular to the direction of scan; L, a length of the second lens group (11); $r_1$ through $r_{11}$, a radius of curvature with respect to refraction in the plane parallel to the direction of scan of each of the surfaces in the order from the light source end; $r_1$' through $r_{11}$', a radius of curvature with respect to refraction in the plane perpendicular to the direction of scan of each of the surfaces in the order from the light source end; d1 through d10, a distance between each adjacent two of the surfaces in order from the light source end; and $n_1$ through $n_5$, an index of refraction at a wave length of 790 nm of each of the lenses in the order from the light source end.

**15.** The system of claim 1, having an aperture ratio of 1:50 in a plane parallel to the direction of scan, an aperture ratio of 1:50 in the plane perpendicular to the direction of scan and a half deflecting angle of 30°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (6) end, and wherein the system satisfies substantially the following conditions:

$f = 287.89$ $\qquad$ $f_p/f_v = 4.24$

$L/f = 0.30$ $\qquad$ $f/r_{10} = -0.27$

| | | | | |
|---|---|---|---|---|
| first converging means | $r_1 = \infty$ | | $r_1' = 20.956$ | |
| | | $d_1 = 4.00$ | | $n_1 = 1.76530$ |
| | $r_2 = \infty$ | | $r_2' = 17.812$ | |
| | | $d_2 = 5.00$ | | |
| | $r_3 = \infty$ | | $r_3' = 46.210$ | |
| | | $d_3 = 3.72$ | | $n_2 = 1.76530$ |
| | $r_4 = \infty$ | | $r_4' = \infty$ | |
| | | $d_4 = 72.19$ | | |
| deflecting surface | $r_5 = \infty$ | | $r_5' = \infty$ | |
| | | $d_5 = 20.48$ | | |
| second converging means | $r_6 = -68.143$ | | $r_6' = -68.143$ | |
| | | $d_6 = 20.64$ | | $n_3 = 1.78506$ |
| | $r_7 = -80.684$ | | $r_7' = -80.684$ | |
| | | $d_7 = 6.77$ | | |
| | $r_8 = 918.262$ | | $r_8' = 918.262$ | |
| | | $d_8 = 7.38$ | | $n_4 = 1.53288$ |
| | $r_9 = -4001.818$ | | $r_9' = -4001.818$ | |
| | | $d_9 = 37.59$ | | |
| | $r_{10} = -1047.105$ | | $r_{10}' = -85.234$ | |
| | | $d_{10} = 14.29$ | | $n_5 = 1.67450$ |
| | $r_{11} = -195.914$ | | $r_{11}' = -34.629$ | |

where f denotes a focal length of the system with respect to refraction in the plane parallel to the direction of scan; $f_p$, a focal length of the second lens group (11) with respect to refraction in the plane parallel to the direction of scan; $f_v$, a focal length of the second lens group (11) with respect to refraction in the plane perpendicular to the direction of scan; L, a length of the second lens group (11);

$r_1$ through $r_{11}$, a radius of curvature with respect to refraction in the plane parallel to the direction of scan of each of the surfaces in the order from the light source end; $r_1'$ through $r_{11}'$, a radius of curvature with respect to refraction in the plane perpendicular to the direction of scan of each of the surfaces in the order from the light source end; $d_1$ through $d_{10}$, a distance between each adjacent two of the surfaces in the order from the light source end; and $n_1$ through $n_5$, an index of refraction at a wave length of 790 nm of each of the lenses in the order from the light source end.

**16.** The system of claim 1, having an aperture ratio of 1:50 in a plane parallel to the direction of scan, an aperture ratio of 1:50 in the plane perpendicular to the direction of scan and a half deflecting angle of 30°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (6) end, and wherein the system satisfies substantially the following conditions:

$f = 287.69$ $\qquad$ $f_p/f_v = 4.49$

$L/f = 0.28$ $\qquad$ $f/r_{10} = -0.39$

| | | | |
|---|---|---|---|
| first converging means | $r_1 = \infty$ | | $r_1' = 21.193$ |
| | | $d_1 = 4.00$ | $n_1 = 1.76530$ |
| | $r_2 = \infty$ | | $r_2' = 17.851$ |
| | | $d_2 = 5.00$ | |
| | $r_3 = \infty$ | | $r_3' = 41.662$ |
| | | $d_3 = 3.72$ | $n_2 = 1.76530$ |
| | $r_4 = \infty$ | | $r_4' = \infty$ |
| | | $d_4 = 65.06$ | |
| deflecting surface | $r_5 = \infty$ | | $r_5' = \infty$ |
| | | $d_5 = 20.48$ | |

second converging means

$$\begin{cases} r_6 = -65.855 & r_6' = -65.855 \\ d_6 = 22.11 & n_3 = 1.78506 \\ r_7 = -82.458 & r_7' = -82.458 \\ d_7 = 0.00 & \\ r_8 = 11290.889 & r_8' = 11290.889 \\ d_8 = 9.89 & n_4 = 1.78506 \\ r_9 = -1046.936 & r_9' = -1046.936 \\ d_9 = 34.50 & \\ r_{10} = -746.887 & r_{10}' = -78.255 \\ d_{10} = 15.00 & n_5 = 1.78506 \\ r_{11} = -192.977 & r_{11}' = -36.101 \end{cases}$$

where f denotes a focal length of the system with respect to refraction in the plane parallel to the direction of scan; $f_p$, a focal length of the second lens group (11) with respect to refraction in the plane parallel to the direction of scan; $f_v$, a focal length of the second lens group (11) with respect to refraction in the plane perpendicular to the direction of scan; L, a length of the second lens group (11); $r_1$ through $r_{11}$, a radius of curvature with respect to refraction in the plane parallel to the direction of scan of each of the surfaces in the order from the light source end; $r_1'$ through $r_{11}'$, a radius of curvature with respect to refraction in the plane perpendicular to the direction of scan of each of the surfaces in the order from the light source end; $d_1$ through $d_{10}$, a distance between each adjacent two of the surfaces in the order from the light source end; and $n_1$, through $n_5$, an index of refraction at a wave length of 790 nm, of each of the lenses in the order from the light source end.

**17.** The system of claim 1, having an aperture ratio of 1:50 in a plane parallel to the direction of scan, an aperture ratio of 1:50 in the plane perpendicular to the direction of scan and a half deflecting angle of 30°, wherein the first lens group (5) comprises first (13) and second (14) lenses which are arranged in the order from the light source (17) end, and the second lens group (11) comprises third (8), fourth (9) and fifth (10) lenses which are arranged in the order from the deflecting surface (16) end, and wherein the system satisfies substantially the following conditions:

$f = 287.66$ $\quad$ $f_p/f_v = 4.35$

$L/f = 0.30$ $\quad$ $f/r_{10} = 0$

| | | | | |
|---|---|---|---|---|
| first converging means | $r_1 = \infty$ | $r_1' = 21.004$ | | |
| | | | $d_1 = 4.00$ | $n_1 = 1.76530$ |
| | $r_2 = \infty$ | $r_2' = 17.845$ | | |
| | | | $d_2 = 5.00$ | |
| | $r_3 = \infty$ | $r_3' = 45.422$ | | |
| | | | $d_3 = 3.72$ | $n_2 = 1.76530$ |
| | $r_4 = \infty$ | $r_4' = \infty$ | | |
| | | | $d_4 = 70.73$ | |
| deflecting surface | $r_5 = \infty$ | $r_5' = \infty$ | | |
| | | | $d_5 = 20.48$ | |
| second converging means | $r_6 = -68.363$ | $r_6' = -68.363$ | | |
| | | | $d_6 = 16.61$ | $n_3 = 1.78506$ |
| | $r_7 = -77.695$ | $r_7' = -77.695$ | | |
| | | | $d_7 = 0.00$ | |
| | $r_8 = 11425.394$ | $r_8' = 11425.394$ | | |
| | | | $d_8 = 17.01$ | $n_4 = 1.78506$ |
| | $r_9 = -8531.994$ | $r_9' = -8531.994$ | | |
| | | | $d_9 = 35.96$ | |
| | $r_{10} = \infty$ | $r_{10}' = -89.050$ | | |
| | | | $d_{10} = 16.53$ | $n_5 = 1.67450$ |
| | $r_{11} = -208.951$ | $r_{11}' = -34.131$ | | |

where f denotes a focal length of the system with respect to refraction in the plane parallel to the direction of scan; $f_p$, a focal length of the second lens group (11) with respect to refraction in the plane parallel to the direction of scan; $f_v$, a focal length of the second lens group (11) with respect to refraction in the lane perpendicular to the direction of scan; L, a length of the second lens group (11); $r_1$ through $r_{11}$, a radius of curvature with respect to refraction in the plane parallel to the direction of scan of each of the surfaces in the order from the light source end; $r_1'$ through $r_{11}'$, a radius of curvature with respect to refraction in the plane perpendicular to the direction of each of the surfaces in the order from the light source end; $d_1$ through $d_{10}$, a distance between each adjacent two of the surfaces in the order from the light source end; and $n_1$ through $n_5$, an index of refraction at a wave length of 790 nm of each of the lenses in the order from the light source end.

**Revendications**

1. Un système de balayage lumineux pour balayer un faisceau de lumière dans une direction, comprenant :

   une source de lumière (17) qui est destinée à émettre un faisceau de lumière;
   un premier groupe de lentilles (15) ayant une vergence unidirectionnelle dans un plan perpendiculaire à la direction du balayage, pour faire converger le faisceau de lumière qui est émis par la source de lumière, de façon à former une image linéaire;
   des moyens de déflexion tournants (7), ayant au moins une surface de déflexion (6) ayant pour but de dévier le faisceau de lumière que l'on a fait converger, ces moyens se trouvant pratiquement à une position à laquelle l'image linéaire est formée; et
   un second groupe de lentilles (11) qui est destiné à faire converger le faisceau de lumière réfléchi par la surface de déflexion des moyens de déflexion, pour former une trace de lumière ponctuelle sur un plan de balayage (12), ce second groupe de lentilles constituant un système anamorphotique ayant une vergence telle que la surface de déflexion et le plan de balayage sont mutuellement dans une relation conjugué dans le plan perpendiculaire à la direction du balayage, caractérisé en ce que le premier groupe de lentilles (5) produit une aberration sphérique surcorrigée dans le plan perpendiculaire à la direction du balayage, de façon à compenser une aberration sphérique sous-corrigée qui est produite par le second groupe de lentilles (11) dans le plan perpendiculaire à la direction du balayage.

2. Le système de la revendication 1, dans lequel le premier groupe de lentilles (5) comprend une première lentille cylindrique positive (2), une seconde lentille cylindrique négative (3) et une troisième lentille cylindrique positive (4), qui sont disposées dans cet ordre à partir de l'extrémité du côté de la source de lumière (17).

3. Le système de la revendication 1, dans lequel le premier groupe de lentilles (5) comprend une première lentille cylindrique négative en forme de ménisque (13), ayant une surface convexe qui fait face à la source de lumière, et une seconde lentille cylindrique positive (14), qui sont disposées dans cet ordre à partir de l'extrémité du côté de la source de lumière (17).

4. Le système de la revendication 1, dans lequel le second groupe de lentilles (11) comprend une première lentille sphérique (18), une seconde lentille sphérique (19) et une troisième lentille (10) ayant au moins une surface torique, qui sont disposées dans cet ordre à partir de l'extrémité du côté de la surface de déflexion (16).

5. Le système de la revendication 1, dans lequel le second groupe de lentilles (11) comprend une première lentille en forme de ménisque (8), ayant une surface concave qui fait face à la surface de déflexion, une seconde lentille en forme de ménisque (9) ayant une surface convexe qui fait face à la première lentille, et une troisième lentille (10) ayant au moins une surface torique, qui sont disposées dans cet ordre à partir de l'extrémité du côté de la surface de déflexion (6).

6. Le système de la revendication 1, satisfaisant pratiquement les conditions suivantes :

   $3{,}8 < f_p/f_v < 5{,}0$
   $0{,}2 < L/f < 0{,}4$
   $-0{,}45 < f/r_a < 0{,}1$

   dans lesquelles f désigne une distance focale du système de balayage lumineux en ce qui concerne la réfraction dans un plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); et $r_a$ désigne un rayon de courbure dans le plan parallèle à la direction du balayage, d'une surface située du côté de la surface de déflexion, pour une lentille se trouvant à l'extrémité du second groupe de lentilles (11), du côté du plan de balayage.

**7.** Le système de la revendication 1, ayant un rapport d'ouverture de 1:49 dans un plan parallèle à la direction du balayage, un rapport d'ouverture de 1:49 dans le plan perpendiculaire à la direction du balayage, et un demi-angle de déflexion de 33°, dans lequel le premier groupe de lentilles (5) comprend des première (2), seconde (3) et troisième (4) lentilles qui sont disposées dans cet ordre à partir de l'extrémité du côté de la source de lumière (17), et le second groupe de lentilles (11) comprend des quatrième (8), cinquième (9) et sixième (10) lentilles qui sont disposées dans cet ordre à partir de l'extrémité du côté de la surface de déflexion (6), et dans lequel le système satisfait pratiquement les conditions suivantes :

$f = 284{,}78$ $\qquad f_p/f_v = 4{,}15$

$L/f = 0{,}31$ $\qquad f/r_{12} = 0$

| | | | | |
|---|---|---|---|---|
| premiers moyens convergents | $r_1 = \infty$ | $r_1' = 46{,}587$ | $d_1 = 2{,}40$ | $n_1 = 1{,}765299$ |
| | $r_2 = \infty$ | $r_2' = \infty$ | $d_2 = 14{,}28$ | |
| | $r_3 = \infty$ | $r_3' = -29{,}870$ | $d_3 = 2{,}20$ | $n_2 = 1{,}510516$ |
| | $r_4 = \infty$ | $r_4' = \infty$ | $d_4 = 33{,}89$ | |
| | $r_5 = \infty$ | $r_5' = 60{,}000$ | $d_5 = 3{,}00$ | $n_3 = 1{,}765299$ |
| | $r_6 = \infty$ | $r_6' = \infty$ | $d_6 = 51{,}35$ | |
| surface de déflexion | $r_7 = \infty$ | $r_7' = \infty$ | $d_7 = 20{,}48$ | |
| seconds moyens convergents | $r_8 = -70{,}606$ | $r_8' = -70{,}606$ | $d_8 = 17{,}28$ | $n_4 = 1{,}765299$ |
| | $r_9 = -77{,}654$ | $r_9' = -77{,}654$ | $d_9 = 0{,}66$ | |
| | $r_{10} = 354{,}042$ | $r_{10}' = 354{,}042$ | $d_{10} = 14{,}21$ | $n_5 = 1{,}532883$ |
| | $r_{11} = 431{,}786$ | $r_{11}' = 431{,}786$ | $d_{11} = 39{,}29$ | |
| | $r_{12} = \infty$ | $r_{12}' = -83{,}615$ | $d_{12} = 18{,}19$ | $n_6 = 1{,}674497$ |
| | $r_{13} = -230{,}766$ | $r_{13}' = -34{,}394$ | | |

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une

distance focale du second groupe de lentilles (11) en ce qui concerne la réfraction dans le plan perpendiculaire à la direction du balayage; L désigne une longueur du second groupe de lentilles (11); $r_1$ à $r_{13}$ désignent un rayon de courbure en ce qui concerne la réfraction dans le plan parallèle à la direction du balayage, pour chacune des surfaces, dans l'ordre à partir de l'extrémité du côté de la source de lumière; $r_1'$ à $r_{13}'$ désignent un rayon de courbure en ce qui concerne la réfraction dans le plan perpendiculaire à la direction du balayage, pour chacune des surfaces, dans l'ordre à partir de l'extrémité du côté de la source; $d_1$ à $d_{12}$ désignent une distance entre chaque paire de surfaces adjacentes, dans l'ordre à partir de l'extrémité du côté de la source; et $n_1$ à $n_6$ désignent un indice de réfraction à une longueur d'onde de 790 nm, pour chacune des lentilles, dans l'ordre à partir de l'extrémité du côté de la source.

8. Le système de la revendication 1, ayant un rapport d'ouverture de 1:49 dans un plan parallèle à la direction du balayage, un rapport d'ouverture de 1:49 dans le plan perpendiculaire à la direction du balayage et un demi-angle de déviation de 33°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 284,78$ $\qquad$ $f_p/f_v = 4,15$

$L/f = 0,31$ $\qquad$ $f/r_{10} = 0$

| | | | | |
|---|---|---|---|---|
| premiers moyens convergents | $r_1 = \infty$ | $r_1' = 21,000$ | $d_1 = 4,00$ | $n_1 = 1,765299$ |
| | $r_2 = \infty$ | $r_2' = 17,545$ | $d_2 = 5,00$ | |
| | $r_3 = \infty$ | $r_3' = 47,389$ | $d_3 = 3,72$ | $n_2 = 1,765299$ |
| | $r_4 = \infty$ | $r_4' = \infty$ | $d_4 = 79,01$ | |
| surface de déflexion | $r_5 = \infty$ | $r_5' = \infty$ | $d_5 = 20.48$ | |
| seconds moyens convergents | $r_6 = -70,606$ | $r_6' = -70,606$ | $d_6 = 17,28$ | $n_3 = 1,765299$ |
| | $r_7 = -77,654$ | $r_7' = -77,654$ | $d_7 = 0,66$ | |
| | $r_8 = 354,042$ | $r_8' = 354,042$ | $d_8 = 14,21$ | $n_4 = 1,532883$ |
| | $r_9 = 431,786$ | $r_9' = 431,786$ | $d_9 = 39,29$ | |
| | $r_{10} = \infty$ | $r_{10}' = -83,615$ | $d_{10} = 18,19$ | $n_5 = 1,674497$ |
| | $r_{11} = -230,766$ | $r_{11}' = -34,394$ | | |

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); $r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1$' à $r_{11}$' désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**9.** Le système de la revendication 1, ayant un rapport d'ouverture de 1:50 dans un plan parallèle à la direction du balayage, un rapport d'ouverture de 1:50 dans le plan perpendiculaire à la direction du balayage et un demi-angle de déviation de 30°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 310,65$ $\qquad f_p/f_v = 4,54$

$L/f = 0,28$ $\qquad f/r_{10} = -0,17$

premiers moyens convergents:

$r_1 = \infty$ $\qquad r_1' = 15,044$

$d_1 = 4,00$ $\qquad n_1 = 1,76530$

$r_2 = \infty$ $\qquad r_2' = 12,773$

$d_2 = 5,00$

$r_3 = \infty$ $\qquad r_3' = 48,842$

$d_3 = 3,72$ $\qquad n_2 = 1,76530$

$r_4 = \infty$ $\qquad r_4' = \infty$

$d_4 = 73,19$

| | | | |
|---|---|---|---|
| surface de déflexion | | $r_5 = \infty$ | $r_5' = \infty$ |
| | | $d_5 = 20,00$ | |
| seconds moyens convergents | { | $r_6 = -70,189$ | $r_6' = -70,189$ |
| | | $d_6 = 18,85$ | $n_3 = 1,76530$ |
| | | $r_7 = -77,471$ | $r_7' = -77,471$ |
| | | $d_7 = 10,00$ | |
| | | $r_8 = 369,975$ | $r_8' = 369,975$ |
| | | $d_8 = 6,15$ | $n_4 = 1,53288$ |
| | | $r_9 = 554,244$ | $r_9' = 554,244$ |
| | | $d_9 = 39,51$ | |
| | | $r_{10} = -1859,183$ | $r_{10}' = -78,953$ |
| | | $d_{10} = 12,34$ | $n_5 = 1,67450$ |
| | | $r_{11} = -227,419$ | $r_{11}' = -33,306$ |

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); $r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1'$ à $r_{11}'$ désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**10.** Le système de la revendication 1, ayant un rapport d'ouverture de 1:50 dans un plan parallèle à la direction du balayage, un rapport d'ouverture de 1:50 dans le plan perpendiculaire à la direction du balayage et un demi-angle de déviation de 30°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 287{,}66$ $\quad f_p/f_v = 4{,}13$

$L/f = 0{,}32$ $\quad f/r_{10} = 0$

| | | | | |
|---|---|---|---|---|
| premiers moyens convergents | $r_1 = \infty$ | $r_1' = 38{,}410$ | | |
| | | | $d_1 = 4{,}00$ | $n_1 = 1{,}76530$ |
| | $r_2 = \infty$ | $r_2' = 26{,}065$ | | |
| | | | $d_2 = 5{,}00$ | |
| | $r_3 = \infty$ | $r_3' = 39{,}264$ | | |
| | | | $d_3 = 3{,}72$ | $n_2 = 1{,}765299$ |
| | $r_4 = \infty$ | $r_4' = \infty$ | | |
| | | | $d_4 = 86{,}06$ | |
| surface de déflexion | $r_5 = \infty$ | $r_5' = \infty$ | | |
| | | | $d_5 = 20{,}00$ | |
| seconds moyens convergents | $r_6 = -83{,}583$ | $r_6' = -83{,}583$ | | |
| | | | $d_6 = 25{,}24$ | $n_3 = 1{,}73759$ |
| | $r_7 = -87{,}673$ | $r_7' = -87{,}678$ | | |
| | | | $d_7 = 10{,}00$ | |
| | $r_8 = 336{,}361$ | $r_8' = 336.361$ | | |
| | | | $d_8 = 6{,}00$ | $n_4 = 1{,}76167$ |
| | $r_9 = 432{,}403$ | $r_9' = 432{,}403$ | | |
| | | | $d_9 = 39{,}58$ | |
| | $r_{10} = \infty$ | $r_{10}' = -65{,}724$ | | |
| | | | $d_{10} = 12{,}00$ | $n_5 = 1{,}60659$ |
| | $r_{11} = -286{,}512$ | $r_{11}' = -29{,}803$ | | |

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); $r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1'$ à $r_{11}'$ désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**11.** Le système de la revendication 1, ayant un rapport d'ouverture de 1:50 dans un plan parallèle à la direction du balayage, un rapport d'ouverture de 1:50 dans le plan perpendiculaire à la direction du balayage et un demi-angle de déviation de 30°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 287,87$ $\qquad$ $f_p/f_v = 3,97$

$L/f = 0,30$ $\qquad$ $f/r_{10} = 0$

| | | | |
|---|---|---|---|
| premiers moyens convergents | $r_1 = \infty$ | $r_1' = 23,564$ | |
| | $d_1 = 4,05$ | | $n_1 = 1,765299$ |
| | $r_2 = \infty$ | $r_2' = 20,286$ | |
| | $d_2 = 5,06$ | | |
| | $r_3 = \infty$ | $r_3' = 54,574$ | |
| | $d_3 = 3,77$ | | $n_2 = 1,765299$ |
| | $r_4 = \infty$ | $r_4' = \infty$ | |
| | $d_4 = 85,42$ | | |
| surface de déflexion | $r_5 = \infty$ | $r_5' = \infty$ | |
| | $d_5 = 25,00$ | | |

seconds moyens convergents

$$\left\{\begin{array}{llll} r_6 = -72{,}763 & & r_6' = -72{,}763 & \\ & d_6 = 19{,}00 & & n_3 = 1{,}76167 \\ r_7 = -77.288 & & r_7' = -77{,}288 & \\ & d_7 = 10{,}00 & & \\ r_8 = 643{,}375 & & r_8' = 643{,}375 & \\ & d_8 = 11{,}15 & & n_4 = 1{,}5119 \\ r_9 = 2849{,}379 & & r_9' = 2849{,}379 & \\ & d_9 = 45{,}00 & & \\ r_{10} = \infty & & r_{10}' = -82{,}637 & \\ & d_{10} = 6{,}00 & & n_5 = 1{,}67450 \\ r_{11} = -306{,}407 & & r_{11}' = -34{,}194 & \end{array}\right.$$

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); $r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1'$ à $r_{11}'$ désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**12.** Le système de la revendication 1, ayant un rapport d'ouverture de 1:50 dans un plan parallèle à la direction du balayage, un rapport d'ouverture de 1:50 dans le plan perpendiculaire à la direction du balayage et un demi-angle de déviation de 30°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 295{,}12$ $f_p/f_v = 4{,}38$

$L/f = 0{,}27$ $f/r_{10} = -0{,}055$

premiers moyens convergents:

$r_1 = \infty$ $r_1' = 23{,}636$

$d_1 = 4{,}55$ $n_1 = 1{,}76530$

$r_2 = \infty$ $r_2' = 20{,}007$

$d_2 = 5{,}68$

$r_3 = \infty$ $r_3' = 46{,}669$

$d_3 = 3{,}72$ $n_2 = 1{,}76530$

$r_4 = \infty$ $r_4' = \infty$

$d_4 = 71{,}86$

surface de déflexion:

$r_5 = \infty$ $r_5' = \infty$

$d_5 = 20{,}00$

seconds moyens convergents:

$r_6 = -65{,}003$ $r_6' = -65{,}003$

$d_6 = 8{,}01$ $n_3 = 1{,}78506$

$r_7 = -73{,}811$ $r_7' = -73{,}811$

$d_7 = 0{,}23$

$r_8 = 607{,}287$ $r_8' = 607{,}287$

$d_8 = 12{,}92$ $n_4 = 1{,}510516$

$r_9 = 407{,}327$ $r_9' = 407{,}327$

$d_9 = 39{,}47$

$r_{10} = -5379{,}689$ $r_{10}' = -117{,}403$

$d_{10} = 19{,}93$ $n_5 = 1{,}72367$

$r_{11} = -167{,}907$ $r_{11}' = -37{,}807$

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11);

$r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1'$ à $r_{11}'$ désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**13.** Le système de la revendication 1, ayant un rapport d'ouverture de 1:50 dans un plan parallèle à la direction du balayage, un rapport d'ouverture de 1:50 dans le plan perpendiculaire à la direction du balayage et un demi-angle de déviation de 30°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 288,01$ $f_p/f_v = 3,98$

$L/f = 0,34$ $f/r_{10} = 0,014$

| | | | |
|---|---|---|---|
| premiers moyens convergents | $r_1 = \infty$ | $r_1' = 25,637$ | |
| | $d_1 = 4,83$ | | $n_1 = 1,76530$ |
| | $r_2 = \infty$ | $r_2' = 21,020$ | |
| | $d_2 = 6,40$ | | |
| | $r_3 = \infty$ | $r_3' = 48,017$ | |
| | $d_3 = 4,50$ | | $n_2 = 1,76530$ |
| | $r_4 = \infty$ | $r_4' = \infty$ | |
| | $d_4 = 79,87$ | | |
| surface de déflexion | $r_5 = \infty$ | $r_5' = \infty$ | |
| | $d_5 = 20,00$ | | |

| | | | |
|---|---|---|---|
| seconds moyens convergents | $r_6 = -68,359$ | $r_6' = -68,359$ | |
| | $d_6 = 12,20$ | | $n_3 = 1,67450$ |
| | $r_7 = -78,902$ | $r_7' = -78,902$ | |
| | $d_7 = 1,74$ | | |
| | $r_8 = 740,172$ | $r_8' = 740,172$ | |
| | $d_8 = 23,55$ | | $n_4 = 1,65903$ |
| | $r_9 = 574,503$ | $r_9' = \cdot 574,503$ | |
| | $d_9 = 38,89$ | | |
| | $r_{10} = 20901,200$ | $r_{10}' = -149,805$ | |
| | $d_{10} = 20,94$ | | $n_5 = 1,63512$ |
| | $r_{11} = -161,094$ | $r_{11}' = -38,452$ | |

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); $r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1'$ à $r_{11}'$ désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**14.** Le système de la revendication 1, ayant un rapport d'ouverture de 1:50 dans un plan parallèle à la direction du balayage, un rapport d'ouverture de 1:50 dans le plan perpendiculaire à la direction du balayage et un demi-angle de déviation de 30°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 291,69 \qquad f_p/f_v = 4,12$

$L/f = 0,32 \qquad f/r_{10} = 0$

| | | | | |
|---|---|---|---|---|
| premiers moyens convergents | $r_1 = \infty$ | | $r_1' = 23,357$ | |
| | | $d_1 = 4,83$ | | $n_1 = 1,76530$ |
| | $r_2 = \infty$ | | $r_2' = 21,316$ | |
| | | $d_2 = 6,40$ | | |
| | $r_3 = \infty$ | | $r_3' = 49,817$ | |
| | | $d_3 = 4,50$ | | $n_2 = 1,76530$ |
| | $r_4 = \infty$ | | $r_4' = \infty$ | |
| | | $d_4 = 77,99$ | | |
| surface de déflexion | $r_5 = \infty$ | | $r_5' = \infty$ | |
| | | $d_5 = 20,00$ | | |

seconds moyens convergents

$$\left\{\begin{array}{llll} r_6 = -67,946 & & r_6' = -67,946 & \\ & d_6 = 11,05 & & n_3 = 1,76167 \\ r_7 = -78,402 & & r_7' = -78,402 & \\ & d_7 = 2,66 & & \\ r_8 = 743,300 & & r_8' = 743,300 & \\ & d_8 = 22,88 & & n_4 = 1,65903 \\ r_9 = 542,759 & & r_9' = 542,759 & \\ & d_9 = 37,26 & & \\ r_{10} = \infty & & r_{10}' = -146,763 & \\ & d_{10} = 19,73 & & n_5 = 1,67450 \\ r_{11} = -165,713 & & r_{11}' = -39,239 & \end{array}\right.$$

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); $r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1'$ à $r_{11}'$ désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**15.** Le système de la revendication 1, ayant un rapport d'ouverture de 1:50 dans un plan parallèle à la direction du balayage, un rapport d'ouverture de 1:50 dans le plan perpendiculaire à la direction du balayage et un demi-angle de déviation de 30°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 287{,}89$ $\qquad$ $f_p/f_v = 4{,}24$

$L/f = 0{,}30$ $\qquad$ $f/r_{10} = -0{,}27$

| | | | |
|---|---|---|---|
| premiers moyens convergents | $r_1 = \infty$ | $r_1' = 20{,}956$ | |
| | $d_1 = 4{,}00$ | | $n_1 = 1{,}76530$ |
| | $r_2 = \infty$ | $r_2' = 17{,}812$ | |
| | $d_2 = 5{,}00$ | | |
| | $r_3 = \infty$ | $r_3' = 46{,}210$ | |
| | $d_3 = 3{,}72$ | | $n_2 = 1{,}76530$ |
| | $r_4 = \infty$ | $r_4' = \infty$ | |
| | $d_4 = 72{,}19$ | | |
| surface de déflexion | $r_5 = \infty$ | $r_5' = \infty$ | |
| | $d_5 = 20{,}48$ | | |
| seconds moyens convergents | $r_6 = -68{,}143$ | $r_6' = -68{,}143$ | |
| | $d_6 = 20{,}64$ | | $n_3 = 1{,}78506$ |
| | $r_7 = -80{,}684$ | $r_7' = -80{,}684$ | |
| | $d_7 = 6{,}77$ | | |
| | $r_8 = 918{,}262$ | $r_8' = 918{,}262$ | |
| | $d_8 = 7{,}38$ | | $n_4 = 1{,}53288$ |
| | $r_9 = -4001{,}818$ | $r_9' = -4001{,}818$ | |
| | $d_9 = 37{,}59$ | | |
| | $r_{10} = -1047{,}105$ | $r_{10}' = -85{,}234$ | |
| | $d_{10} = 14{,}29$ | | $n_5 = 1{,}67450$ |
| | $r_{11} = -195{,}914$ | $r_{11}' = -34{,}629$ | |

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); $r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1'$ à $r_{11}'$ désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**16.** Le système de la revendication 1, ayant un rapport d'ouverture de 1:50 dans un plan parallèle à la direction du balayage, un rapport d'ouverture de 1:50 dans le plan perpendiculaire à la direction du balayage et un demi-angle de déviation de 30°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 287,69$ $\qquad f_p/f_v = 4,49$

$L/f = 0,28$ $\qquad f/r_{10} = -0,39$

| | | | | |
|---|---|---|---|---|
| premiers moyens convergents | $r_1 = \infty$ | | $r_1' = 21,193$ | |
| | | $d_1 = 4,00$ | | $n_1 = 1,76530$ |
| | $r_2 = \infty$ | | $r_2' = 17,851$ | |
| | | $d_2 = 5,00$ | | |
| | $r_3 = \infty$ | | $r_3' = 41,662$ | |
| | | $d_3 = 3,72$ | | $n_2 = 1,76530$ |
| | $r_4 = \infty$ | | $r_4' = \infty$ | |
| | | $d_4 = 65,06$ | | |
| surface de déflexion | $r_5 = \infty$ | | $r_5' = \infty$ | |
| | | $d_5 = 20,48$ | | |

| | | | | |
|---|---|---|---|---|
| seconds moyens convergents | $r_6$ = -65,855 | | $r_6$' = -65,855 | |
| | | $d_6$ = 22,11 | | $n_3$ = 1,78506 |
| | $r_7$ = -82,458 | | $r_7$' = -82,458 | |
| | | $d_7$ = 0,00 | | |
| | $r_8$ = 11290,889 | | $r_8$' = 11290,889 | |
| | | $d_8$ = 9,89 | | $n_4$ = 1,78506 |
| | $r_9$ = -1046,936 | | $r_9$' = -1046,936 | |
| | | $d_9$ = 34,50 | | |
| | $r_{10}$ = -746,887 | | $r_{10}$' = -78,255 | |
| | | $d_{10}$ = 15,00 | | $n_5$ = 1,78506 |
| | $r_{11}$ = -192,977 | | $r_{11}$' = -36,101 | |

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); $r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1$' à $r_{11}$' désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**17.** Le système de la revendication 1, ayant un rapport d'ouverture de 1:50 dans un plan parallèle à la direction du balayage, un rapport d'ouverture de 1:50 dans le plan perpendiculaire à la direction du balayage et un demi-angle de déviation de 30°, dans lequel le premier groupe de lentilles (5) comprend des première (13) et seconde (14) lentilles qui sont disposées dans cet ordre à partir de l'extrémité du côté de la source de lumière (17), et le second groupe de lentilles (11) comprend des troisième (8), quatrième (9) et cinquième (10) lentilles qui sont disposées dans cet ordre à partir de l'extrémité du côté de la surface de déflexion (6), et dans lequel le système satisfait pratiquement les conditions suivantes :

$f = 287{,}66$  $f_p/f_v = 4{,}35$

$L/f = 0{,}30$  $f/r_{10} = 0$

| | | | | |
|---|---|---|---|---|
| premiers moyens convergents | $r_1 = \infty$ | $r_1' = 21{,}004$ | | |
| | | | $d_1 = 4{,}00$ | $n_1 = 1{,}76530$ |
| | $r_2 = \infty$ | $r_2' = 17{,}845$ | | |
| | | | $d_2 = 5{,}00$ | |
| | $r_3 = \infty$ | $r_3' = 45{,}422$ | | |
| | | | $d_3 = 3{,}72$ | $n_2 = 1{,}76530$ |
| | $r_4 = \infty$ | $r_4' = \infty$ | | |
| | | | $d_4 = 70{,}73$ | |
| surface de déflexion | $r_5 = \infty$ | $r_5' = \infty$ | | |
| | | | $d_5 = 20{,}48$ | |
| seconds moyens convergents | $r_6 = -68{,}363$ | $r_6' = -68{,}363$ | | |
| | | | $d_6 = 16{,}61$ | $n_3 = 1{,}78506$ |
| | $r_7 = -77.695$ | $r_7' = -77{,}695$ | | |
| | | | $d_7 = 0{,}00$ | |
| | $r_8 = 11425{,}394$ | $r_8' = 11425{,}394$ | | |
| | | | $d_8 = 17{,}01$ | $n_4 = 1{,}78506$ |
| | $r_9 = -8531{,}994$ | $r_9' = -8531{,}994$ | | |
| | | | $d_9 = 35{,}96$ | |
| | $r_{10} = \infty$ | $r_{10}' = -89{,}050$ | | |
| | | | $d_{10} = 16{,}53$ | $n_5 = 1{,}67450$ |
| | $r_{11} = -208{,}951$ | $r_{11}' = -34{,}131$ | | |

dans lesquelles f désigne une distance focale du système en ce qui concerne la réfraction dans le plan parallèle à la direction du balayage; $f_p$ désigne une distance focale du second groupe de lentilles (11) en ce qui concerne la réfraction dans le plan parallèle à la direction du balayage; $f_v$ désigne une distance focale du second groupe de lentilles (11) en ce qui concerne la réfraction dans le plan perpendiculaire à la direction du balayage; L désigne une longueur du second groupe de lentilles (11); $r_1$ à $r_{11}$ désignent un rayon de courbure en ce qui concerne la réfraction dans le plan parallèle à la direction du balayage, pour chacune des surfaces, dans l'ordre à partir de l'extrémité du côté de la source de lumière; $r_1'$ à $r_{11}'$ désignent un rayon de courbure en ce qui concerne la réfraction dans le plan perpendiculaire à la direction du balayage, pour chacune des surfaces, dans l'ordre à partir de l'extrémité du côté de la source de lumière; $d_1$ à $d_{10}$ désignent une distance entre chaque paire de surfaces adjacentes, dans l'ordre à partir de l'extrémité du côté de la source de lumière; et $n_1$ à $n_5$ désignent un indice de réfraction à une longueur d'onde de 790 nm, pour chacune des lentilles, dans l'ordre à partir de l'extrémité du côté de la source.

**Patentansprüche**

1. Lichtabtastsystem zum Abtasten eines Lichtstrahls in einer Richtung mit:
   einer Lichtquelle (17) zum Ausstrahlen eines Lichtstrahls;
   einer ersten Linsengruppe (5) mit einer unidirektionalen, optischen Leistung in einer Ebene senkrecht zur Abtastrichtung zum Bündeln des von der Lichtquelle emittierten Lichtstrahls zum Bilden eines Linienbildes;
   einer drehbaren Ablenkvorrichtung (7) mit wenigstens einer ablenkenden Oberfläche (6) zum Ablenken des gebündelten Lichtstrahls im wesentlichen in eine Position, wo das Linienbild gebildet wird; und
   eine zweite Linsengruppe (11) zum Bündeln des von der Ablenkoberläche der Ablenkvorrichtung reflektierten Lichts zum Bilden eines Lichtpunkts auf der Abtastebene (12), wobei die zweite Linsengruppe ein anamorphotisches System mit einer solchen optischen Leistung bildet, daß die Ablenkoberfläche und die Abtastebene in der Ebene senkrecht zur Abtastrichtung in konjungierter Beziehung zueinander stehen, dadurch gekennzeichnet, daß die erste Linsengruppe (5) eine überkorrigierte sphärische Aberration in der Ebene senkrecht zur Abtastrichtung erzeugt, um eine unterkorrigierte sphärische Aberration zu kompensieren, die durch die zweite Linsengruppe (11) in der Ebene senkrecht zu Abtastrichtung erzeugt wird.

2. System nach Anspruch 1, wobei die erste Linsengruppe (5) eine erste, positiv zylindrische Linse (2), eine zweite, negativ zylindrische Linse (3) und eine dritte, positiv zylindrische Linse (4) umfaßt, die in dieser Reihenfolge von dem Lichtquellenende (17) her angeordnet sind.

3. System nach Anspruch 1, wobei die erste Linsengruppe (5) eine erste, meniskus-negativ zylindrische Linse (13) mit einer konvexen Oberfläche, die der Lichtquelle gegenüberliegt, und eine zweite, positiv zylindrische Linse (14) umfaßt, die in dieser Reihenfolge von dem Lichtquellenende (17) her angeordnet sind.

4. System nach Anspruch 1, wobei die zweite Linsengruppe (11) eine erste, sphärische Linse (18), eine zweite, sphärische Linse (19) und eine dritte Linse (10) mit wenigstens einer torischen Oberfläche umfaßt, die in dieser Reihenfolge von der Ablenkoberfläche (16) her angeordnet sind.

5. System nach Anspruch 1, wobei die zweite Linsengruppe (11) eine erste Meniskuslinse (8) mit einer konkaven Oberfläche gegenüber der Ablenkoberfläche, eine zweite Meniskuslinse (9) mit einer konvexen Oberfläche gegenüber der ersten Linse und eine dritte Linse (10) mit wenigstens einer torischen Oberfläche umfaßt, die in dieser Reihenfolge von der Ablenkoberfläche (16) her angeordnet sind.

6. System nach Anspruch 1, das im wesentlichen die folgenden Bedingungen erfüllt:

   $3{,}8 < f_p/f_v < 5{,}0$
   $0{,}2 < L/F < 0{,}4$
   $-0{,}45 < f/r_a < 0{,}1$

   wobei f eine Brennweite des Lichtabtastsystems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; und $r_a$ einen Krümmungsradius in der Ebene parallel zur Abtastrichtung einer zur Ablenkoberfläche lenkenden Oberfläche einer Linse am Abtastebenenende der zweiten Linsengruppe (11) darstellt.

7. System nach Anspruch 1 mit einem Aperturverhältnis in einer Ebene parallel zur Abtastrichtung von 1:49, einem Aperturverhältnis in der Ebene senkrecht zur Abtastrichtung von 1:49 und einem Ablenkhalbwinkel von 33°, wobei die erste Linsengruppe (5) erste (2), zweite (3) und dritte (4) Linsen umfaßt, die in dieser Reihenfolge von dem Lichtquellenende (17) her angeordnet sind, und die zweite Linsengruppe (11) vierte (8), fünfte (9) und sechste (10) Linsen umfaßt, die in dieser Reihenfolge von der Ablenkoberfläche (6) her angeordnet sind, und wobei das System im wesentlichen folgende Bedingungen erfüllt:

$$f = 284{,}78 \qquad f_p/f_v = 4{,}15$$

$$L/f = 0{,}31 \qquad f/r_{12} = 0$$

| | | | | |
|---|---|---|---|---|
| | $r_1 = \infty$ | $r_1' = 46{,}587$ | $d_1 = 2{,}40$ | $n_1 = 1{,}765299$ |
| | $r_2 = \infty$ | $r_2' = \infty$ | $d_2 = 14{,}28$ | |
| erste Bündelungsvorrichtung | $r_3 = \infty$ | $r_3' = -29{,}870$ | $d_3 = 2{,}20$ | $n_2 = 1{,}510516$ |
| | $r_4 = \infty$ | $r_4' = \infty$ | $d_4 = 33{,}89$ | |
| | $r_5 = \infty$ | $r_5' = 60{,}000$ | $d_5 = 3{,}00$ | $n_3 = 1{,}765299$ |
| | $r_6 = \infty$ | $r_6' = \infty$ | $d_6 = 51{,}35$ | |

| | | | | |
|---|---|---|---|---|
| Ablenkoberfläche | $r_7 = \infty$ | $r_7' = \infty$ | $d_7 = 20{,}48$ | |

| | | | | |
|---|---|---|---|---|
| | $r_8 = -70{,}606$ | $r_8' = -70{,}606$ | $d_8 = 17{,}28$ | $n_4 = 1{,}765299$ |
| | $r_9 = -77{,}654$ | $r_9' = -77{,}654$ | $d_9 = 0{,}66$ | |
| zweite Bündelungsvorrichtung | $r_{10} = 354{,}042$ | $r_{10}' = 354{,}042$ | $d_{10} = 14{,}21$ | $n_5 = 1{,}532893$ |
| | $r_{11} = 431{,}786$ | $r_{11}' = 431{,}786$ | $d_{11} = 39{,}29$ | |
| | $r_{12} = \infty$ | $r_{12}' = -83{,}615$ | $d_{12} = 18{,}19$ | $n_6 = 1{,}674497$ |
| | $r_{13} = -230{,}766$ | $r_{13}' = -34{,}394$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{13}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{13}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{12}$ eine Abstand zwischen

allen zwei aneinandergrenzenden Oberflächen in der Reihenfolge von dem Lichtquellenende darstellt; und $n_1$ bis $n_6$ einen Brechungsindex bei einer Wellenlänge von 790nm jeder der Linsen in der Reihenfolge von dem Lichtquellenende darstellt.

8. System nach Anspruch 1 mit einem Aperturverhältnis in einer Ebene parallel zur Abtastrichtung von 1:49, einem Aperturverhältnis in der Ebene senkrecht zur Abtastrichtung von 1:49 und einem Ablenkhalbwinkel von 33, wobei die erste Linsengruppe (5) erste (13) und zweite (14) Linsen umfaßt, die in dieser Reihenfolge von dem Lichtquellenende (17) her angeordnet sind, und die zweite Linsengruppe (11) dritte (8), vierte (9) und fünfte (10) Linsen umfaßt, die in dieser Reihenfolge von der Ablenkoberfläche (16) her angeordnet sind, und wobei das System im wesentlichen folgende Bedingungen erfüllt:

$f = 284{,}78$ $\quad f_p/f_v = 4{,}15$

$L/f = 0{,}31$ $\quad f/r_{10} = 0$

| | | | | |
|---|---|---|---|---|
| erste Bündelungsvorrichtung | $r_1 = \infty$ | $r_1' = 21{,}000$ | $d_1 = 4{,}00$ | $n_1 = 1{,}765299$ |
| | $r_2 = \infty$ | $r_2' = 17{,}545$ | $d_2 = 5{,}00$ | |
| | $r_3 = \infty$ | $r_3' = 47{,}389$ | $d_3 = 3{,}72$ | $n_2 = 1{,}765299$ |
| | $r_4 = \infty$ | $r_4' = \infty$ | $d_4 = 79{,}01$ | |
| Ablenkoberfläche | $r_5 = \infty$ | $r_5' = \infty$ | $d_5 = 20{,}48$ | |
| zweite Bündelungsvorrichtung | $r_6 = -70{,}606$ | $r_6' = -70{,}606$ | $d_6 = 17{,}28$ | $n_3 = 1{,}765299$ |
| | $r_7 = -77{,}654$ | $r_7' = -77{,}654$ | $d_7 = 0{,}66$ | |
| | $r_8 = 354{,}042$ | $r_8' = 354{,}042$ | $d_8 = 14{,}21$ | $n_4 = 1{,}532893$ |
| | $r_9 = 431{,}786$ | $r_9' = 431{,}786$ | $d_9 = 39{,}29$ | |
| | $r_{10} = \infty$ | $r_{10}' = -83{,}615$ | $d_{10} = 18{,}19$ | $n_5 = 1{,}674497$ |
| | $r_{11} = -230{,}766$ | $r_{11}' = -34{,}394$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen allen zwei aneinandergrenzenden Oberflächen in der Reihenfolge von dem Lichtquellenende darstellt;

und $n_1$ bis $n_5$ einen Brechungsindex bei einer Wellenlänge von 790nm jeder der Linsen in der Reihenfolge von dem Lichtquellenende darstellt.

9. System nach Anspruch 1 mit einem Aperturverhältnis in einer Ebene parallel zur Abtastrichtung von 1:50, einem Aperturverhältnis in der Ebene senkrecht zur Abtastrichtung von 1:50 und einem Ablenkhalbwinkel von 30°, wobei die erste Linsengruppe (5) erste (13) und zweite (14) Linsen umfaßt, die in dieser Reihenfolge von dem Lichtquellenende (17) her angeordnet sind, und die zweite Linsengruppe (11) dritte (8), vierte (9) und fünfte (10) Linsen umfaßt, die in dieser Reihenfolge von der Ablenkoberfläche (6) her angeordnet sind, und wobei das System im wesentlichen folgende Bedingungen erfüllt:

$f = 310,65$ $f_p/f_v = 4,54$

$L/f = 0,28$ $f/r_{10} = -0,17$

| | | | | |
|---|---|---|---|---|
| erste Bündelungsvorrichtung | $r_1 = \infty$ | $r_1' = 15,044$ | $d_1 = 4,00$ | $n_1 = 1,76530$ |
| | $r_2 = \infty$ | $r_2' = 12,773$ | $d_2 = 5,00$ | |
| | $r_3 = \infty$ | $r_3' = 48,842$ | $d_3 = 3,72$ | $n_2 = 1,76530$ |
| | $r_4 = \infty$ | $r_4' = \infty$ | $d_4 = 73,19$ | |
| Ablenkoberfläche | $r_5 = \infty$ | $r_5' = \infty$ | $d_5 = 20,00$ | |
| zweite Bündelungsvorrichtung | $r_6 = -70,189$ | $r_6' = -70,189$ | $d_6 = 18,85$ | $n_3 = 1,76530$ |
| | $r_7 = -77,471$ | $r_7' = -77,471$ | $d_7 = 10,00$ | |
| | $r_8 = 369,975$ | $r_8' = 369,975$ | $d_8 = 6,15$ | $n_4 = 1,53288$ |
| | $r_9 = 554,244$ | $r_9' = 554,244$ | $d_9 = 39,51$ | |
| | $r_{10} = -1859,183$ | $r_{10}' = -78,953$ | $d_{10} = 12,34$ | $n_5 = 1,67450$ |
| | $r_{11} = -227,419$ | $r_{11}' = -33,306$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen

allen zwei aneinandergrenzenden Oberflächen in der Reihenfolge von dem Lichtquellenende darstellt; und $n_1$ bis $n_5$ einen Brechungsindex bei einer Wellenlänge von 790nm jeder der Linsen in der Reihenfolge von dem Lichtquellenende darstellt.

**10.** System nach Anspruch 1 mit einem Aperturverhältnis in einer Ebene parallel zur Abtastrichtung von 1:50, einem Aperturverhältnis in der Ebene senkrecht zur Abtastrichtung von 1:50 und einem Ablenkhalbwinkel von 30°, wobei die erste Linsengruppe (5) erste (13) und zweite (14) Linsen umfaßt, die in dieser Reihenfolge von dem Lichtquellenende (17) her angeordnet sind, und die zweite Linsengruppe (11) dritte (8), vierte (9) und fünfte (10) Linsen umfaßt, die in dieser Reihenfolge von der Ablenkoberfläche (6) her angeordnet sind, und wobei das System im wesentlichen folgende Bedingungen erfüllt:

$f = 287,66$ $\quad f_p/f_v = 4,13$

$L/f = 0,32$ $\quad f/r_{10} = 0$

| | | | | |
|---|---|---|---|---|
| | $r_1 = \infty$ | $r_1' = 38,410$ | $d_1 = 4,00$ | $n_1 = 1,76530$ |
| | $r_2 = \infty$ | $r_2' = 26,065$ | $d_2 = 5,00$ | |
| erste Bündelungsvorrichtung | $r_3 = \infty$ | $r_3' = 39,264$ | $d_3 = 3,72$ | $n_2 = 1,765299$ |
| | $r_4 = \infty$ | $r_4' = \infty$ | $d_4 = 86,06$ | |
| Ablenkoberfläche | $r_5 = \infty$ | $r_5' = \infty$ | $d_5 = 20,00$ | |
| | $r_6 = -83,583$ | $r_6' = -83,583$ | $d_6 = 25,24$ | $n_3 = 1,73759$ |
| | $r_7 = -87,678$ | $r_7' = -87,678$ | $d_7 = 10,00$ | |
| zweite Bündelungsvorrichtung | $r_8 = 336,361$ | $r_8' = 336,361$ | $d_8 = 6,00$ | $n_4 = 1,76167$ |
| | $r_9 = 432,403$ | $r_9' = 432,403$ | $d_9 = 39,58$ | |
| | $r_{10} = \infty$ | $r_{10}' = -65,724$ | $d_{10} = 12,00$ | $n_5 = 1,60659$ |
| | $r_{11} = -286,512$ | $r_{11}' = -29,803$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe

(11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen allen zwei aneinandergrenzenden Oberflächen in der Reihenfolge von dem Lichtquellenende darstellt; und $n_1$ bis $n_5$ einen Brechungsindex bei einer Wellenlänge von 790nm jeder der Linsen in der Reihenfolge von dem Lichtquellenende darstellt.

**11.** System nach Anspruch 1 mit einem Aperturverhältnis in einer Ebene parallel zur Abtastrichtung von 1:50, einem Aperturverhältnis in der Ebene senkrecht zur Abtastrichtung von 1:50 und einem Ablenkhalbwinkel von 30°, wobei die erste Linsengruppe (5) erste (13) und zweite (14) Linsen umfaßt, die in dieser Reihenfolge von dem Lichtquellenende (17) her angeordnet sind, und die zweite Linsengruppe (11) dritte (8), vierte (9) und fünfte (10) Linsen umfaßt, die in dieser Reihenfolge von der Ablenkoberfläche (6) her angeordnet sind, und wobei das System im wesentlichen folgende Bedingungen erfüllt:

$f = 287{,}87$ $\quad f_p/f_v = 3{,}97$

$L/f = 0{,}30$ $\quad f/r_{10} = 0$

| | | | | |
|---|---|---|---|---|
| | $r_1 = \infty$ | $r_1' = 23{,}564$ | $d_1 = 4{,}05$ | $n_1 = 1{,}765299$ |
| | $r_2 = \infty$ | $r_2' = 26{,}286$ | $d_2 = 5{,}06$ | |
| erste Bündelungsvorrichtung | $r_3 = \infty$ | $r_3' = 54{,}574$ | $d_3 = 3{,}77$ | $n_2 = 1{,}765299$ |
| | $r_4 = \infty$ | $r_4' = \infty$ | $d_4 = 85{,}42$ | |
| Ablenkoberfläche | $r_5 = \infty$ | $r_5' = \infty$ | $d_5 = 25.00$ | |
| | $r_6 = -72{,}763$ | $r_6' = -72{,}763$ | $d_6 = 19{,}00$ | $n_3 = 1{,}76167$ |
| | $r_7 = -77{,}288$ | $r_7' = -77{,}288$ | $d_7 = 10{,}00$ | |
| zweite Bündelungsvorrichtung | $r_8 = 643{,}375$ | $r_8' = 643{,}375$ | $d_8 = 11{,}15$ | $n_4 = 1{,}5119$ |
| | $r_9 = 2849{,}379$ | $r_9' = 2849{,}379$ | $d_9 = 45{,}00$ | |
| | $r_{10} = \infty$ | $r_{10}' = -82{,}637$ | $d_{10} = 6{,}00$ | $n_5 = 1{,}67450$ |
| | $r_{11} = -306{,}407$ | $r_{11}' = -34{,}194$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen allen zwei aneinandergrenzenden Oberflächen in der Reihenfolge von dem Lichtquellenende darstellt; und $n_1$ bis $n_5$ einen Brechungsindex bei einer Wellenlänge von 790nm jeder der Linsen in der Reihenfolge von dem Lichtquellenende darstellt.

**12.** System nach Anspruch 1 mit einem Aperturverhältnis in einer Ebene parallel zur Abtastrichtung von 1:50, einem Aperturverhältnis in der Ebene senkrecht zur Abtastrichtung von 1:50 und einem Ablenkhalbwinkel von 30°, wobei die erste Linsengruppe (5) erste (13) und zweite (14) Linsen umfaßt, die in dieser Reihenfolge von dem Lichtquellenende (17) her angeordnet sind, und die zweite Linsengruppe (11) dritte (8), vierte (9) und fünfte (10) Linsen umfaßt, die in dieser Reihenfolge von der Ablenkoberfläche (6) her angeordnet sind, und wobei das System im wesentlichen folgende Bedingungen erfüllt:

$f = 295{,}12$ $\quad f_p/f_v = 4{,}83$

$L/f = 0{,}27$ $\quad f/r_{10} = -0{,}055$

| | | | | |
|---|---|---|---|---|
| | $r_1 = \infty$ | $r_1' = 23{,}636$ | $d_1 = 4{,}55$ | $n_1 = 1{,}76530$ |
| | $r_2 = \infty$ | $r_2' = 20{,}007$ | $d_2 = 5{,}68$ | |
| erste Bündelungsvorrichtung | $r_3 = \infty$ | $r_3' = 46{,}669$ | $d_3 = 3{,}72$ | $n_2 = 1{,}76530$ |
| | $r_4 = \infty$ | $r_4' = \infty$ | $d_4 = 71{,}86$ | |
| Ablenkoberfläche | $r_5 = \infty$ | $r_5' = \infty$ | $d_5 = 20{,}00$ | |

| | | | | |
|---|---|---|---|---|
| | $r_6 = -65{,}003$ | $r_6' = -65{,}003$ | $d_6 = 8{,}01$ | $n_3 = 1{,}78506$ |
| | $r_7 = -73{,}811$ | $r_7' = -73{,}811$ | $d_7 = 0{,}23$ | |
| zweite Bündelungsvorrichtung | $r_8 = 607{,}287$ | $r_8' = 607{,}287$ | $d_8 = 12{,}92$ | $n_4 = 1{,}510516$ |
| | $r_9 = 407{,}327$ | $r_9' = 407{,}327$ | $d_9 = 39{,}47$ | |
| | $r_{10} = -5379{,}689$ | $r_{10}' = -117{,}403$ | $d_{10} = 19{,}93$ | $n_5 = 1{,}72367$ |
| | $r_{11} = -167{,}907$ | $r_{11}' = -37{,}807$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen allen zwei aneinandergrenzenden Oberflächen in der Reihenfolge von dem Lichtquellenende darstellt; und $n_1$ bis $n_5$ einen Brechungsindex bei einer Wellenlänge von 790nm jeder der Linsen in der Reihenfolge von dem Lichtquellenende darstellt.

**13.** System nach Anspruch 1 mit einem Aperturverhältnis in einer Ebene parallel zur Abtastrichtung von 1:50, einem Aperturverhältnis in der Ebene senkrecht zur Abtastrichtung von 1:50 und einem Ablenkhalbwinkel von 30°, wobei die erste Linsengruppe (5) erste (13) und zweite (14) Linsen umfaßt, die in dieser Reihenfolge von dem Lichtquellenende (17) her angeordnet sind, und die zweite Linsengruppe (11) dritte (8), vierte (9) und fünfte (10) Linsen umfaßt, die in dieser Reihenfolge von der Ablenkoberfläche (6) her angeordnet sind, und wobei das System im wesentlichen folgende Bedingungen erfüllt:

$f = 288{,}01$ $\quad f_p/f_v = 3{,}98$

$L/f = 0{,}34$ $\quad f/r_{10} = 0{,}014$

| | | | | |
|---|---|---|---|---|
| | $r_1 = \infty$ | $r_1' = 25{,}637$ | $d_1 = 4{,}83$ | $n_1 = 1{,}76530$ |
| | $r_2 = \infty$ | $r_2' = 21{,}020$ | $d_2 = 6{,}40$ | |
| erste Bünde- | $r_3 = \infty$ | $r_3' = 48{,}017$ | $d_3 = 4{,}50$ | $n_2 = 1{,}76530$ |

| | | | | |
|---|---|---|---|---|
| lungsvorrichtung | $r_4 = \infty$ | $r_4' = \infty$ | $d_4 = 78,87$ | |
| Ablenkoberfläche | $r_5 = \infty$ | $r_5' = \infty$ | $d_5 = 20,00$ | |
| | $r_6 = -68,359$ | $r_6' = -68,359$ | $d_6 = 12,00$ | $n_3 = 1,67450$ |
| | $r_7 = -78,902$ | $r_7' = -78,902$ | $d_7 = 1,74$ | |
| zweite Bündelungsvorrichtung | $r_8 = 740,172$ | $r_8' = 740,172$ | $d_8 = 23,55$ | $n_4 = 1,65903$ |
| | $r_9 = 574,503$ | $r_9' = 574,503$ | $d_9 = 38,89$ | |
| | $r_{10}=20901,200$ | $r_{10}'=-149,805$ | $d_{10}= 20,94$ | $n_5 = 1,63512$ |
| | $r_{11}=-161,094$ | $r_{11}'= -38,452$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen allen zwei aneinandergrenzenden Oberflächen in der Reihenfolge von dem Lichtquellenende darstellt; und $n_1$ bis $n_5$ einen Brechungsindex bei einer Wellenlänge von 790nm jeder der Linsen in der Reihenfolge von dem Lichtquellenende darstellt.

**14.** System nach Anspruch 1 mit einem Aperturverhältnis in einer Ebene parallel zur Abtastrichtung von 1:50, einem Aperturverhältnis in der Ebene senkrecht zur Abtastrichtung von 1:50 und einem Ablenkhalbwinkel von 30°, wobei die erste Linsengruppe (5) erste (13) und zweite (14) Linsen umfaßt, die in dieser Reihenfolge von dem Lichtquellenende (17) her angeordnet sind, und die zweite Linsengruppe (11) dritte (8), vierte (9) und fünfte (10) Linsen umfaßt, die in dieser Reihenfolge von der Ablenkoberfläche (6) her angeordnet sind, und wobei das System im wesentlichen folgende Bedingungen erfüllt:

$f = 291,69$ $f_p/f_v = 4,12$

$L/f = 0,32$ $f/r_{10} = 0$

| | | | | |
|---|---|---|---|---|
| | $r_1 = \infty$ | $r_1' = 23,357$ | $d_1 = 4,83$ | $n_1 = 1,76530$ |
| | $r_2 = \infty$ | $r_2' = 21,316$ | $d_2 = 6,40$ | |
| erste Bündelungsvorrichtung | $r_3 = \infty$ | $r_3' = 49,817$ | $d_3 = 4,50$ | $n_2 = 1,76530$ |
| | $r_4 = \infty$ | $r_4' = \infty$ | $d_4 = 11,99$ | |
| Ablenkoberfläche | $r_5 = \infty$ | $r_5' = \infty$ | $d_5 = 20,00$ | |
| | $r_6 = -67,946$ | $r_6' = -67,946$ | $d_6 = 11,05$ | $n_3 = 1,76167$ |
| | $r_7 = -78,402$ | $r_7' = -78,402$ | $d_7 = 2,66$ | |
| zweite Bündelungsvorrichtung | $r_8 = 743,300$ | $r_8' = 743,300$ | $d_8 = 22,88$ | $n_4 = 1,65903$ |
| | $r_9 = 542,759$ | $r_9' = 542,759$ | $d_9 = 37,26$ | |
| | $r_{10} = \infty$ | $r_{10}' = -146,768$ | $d_{10} = 19,73$ | $n_5 = 1,67450$ |
| | $r_{11} = -165,713$ | $r_{11}' = -39,239$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen allen zwei aneinandergrenzenden Oberflächen in der Reihenfolge von dem Lichtquellenende darstellt; und $n_1$ bis $n_5$ einen Brechungsindex bei einer Wellenlänge von 790nm jeder der Linsen in der Reihenfolge von dem Lichtquellenende darstellt.

**15.** System nach Anspruch 1 mit einem Aperturverhältnis in einer Ebene parallel zur Abtastrichtung von 1:50, einem Aperturverhältnis in der Ebene senkrecht zur Abtastrichtung von 1:50 und einem Ablenkhalbwinkel von 30°, wobei die erste Linsengruppe (5) erste (13) und zweite (14) Linsen umfaßt, die in dieser Reihenfolge von dem Lichtquellenende (17) her angeordnet sind, und die zweite Linsengruppe (11) dritte (8), vierte (9) und fünfte (10) Linsen umfaßt, die in dieser Reihenfolge von der Ablenkoberfläche (6) her angeordnet sind, und wobei das System im wesentlichen folgende Bedingungen erfüllt:

| | |
|---|---|
| $f = 287{,}89$ | $f_p/f_v = 4{,}24$ |
| $L/f = 0{,}30$ | $f/r_{10} = -0{,}27$ |

| | | | | |
|---|---|---|---|---|
| | $r_1 = \infty$ | $r_1' = 20{,}956$ | $d_1 = 4{,}00$ | $n_1 = 1{,}76530$ |
| | $r_2 = \infty$ | $r_2' = 17{,}812$ | $d_2 = 5{,}00$ | |
| erste Bündelungsvorrichtung | $r_3 = \infty$ | $r_3' = 46{,}210$ | $d_3 = 3{,}72$ | $n_2 = 1{,}76530$ |
| | $r_4 = \infty$ | $r_4' = \infty$ | $d_4 = 72{,}19$ | |
| Ablenkoberfläche | $r_5 = \infty$ | $r_5' = \infty$ | $d_5 = 20{,}48$ | |
| | $r_6 = -68{,}143$ | $r_6' = -68{,}143$ | $d_6 = 20{,}64$ | $n_3 = 1{,}78506$ |
| | $r_7 = -80{,}684$ | $r_7' = -88{,}684$ | $d_7 = 6{,}77$ | |
| zweite Bündelungsvorrichtung | $r_8 = 918{,}262$ | $r_8' = 918{,}262$ | $d_8 = 7{,}38$ | $n_4 = 1{,}53288$ |
| | $r_9 = -4001{,}818$ | $r_9' = -4001{,}818$ | $d_9 = 37{,}59$ | |
| | $r_{10} = -1047{,}105$ | $r_{10}' = -85{,}234$ | $d_{10} = 14{,}29$ | $n_5 = 1{,}67450$ |
| | $r_{11} = -195{,}914$ | $r_{11}' = -34{,}629$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen allen zwei aneinandergrenzenden Oberflächen in der Reihenfolge von dem Lichtquellenende darstellt; und $n_1$ bis $n_5$ einen Brechungsindex bei einer Wellenlänge von 790nm jeder der Linsen in der Reihenfolge von dem Lichtquellenende darstellt.

**16.** System nach Anspruch 1 mit einem Aperturverhältnis in einer Ebene parallel zur Abtastrichtung von 1:50, einem Aperturverhältnis in der Ebene senkrecht zur Abtastrichtung von 1:50 und einem Ablenkhalbwinkel von 30°, wobei die erste Linsengruppe (5) erste (13) und zweite (14) Linsen umfaßt, die in dieser Reihenfolge von dem Lichtquellenende (17) her angeordnet sind, und die zweite Linsengruppe (11) dritte (8), vierte (9) und fünfte (10) Linsen umfaßt, die in dieser Reihenfolge von der Ablenkoberfläche (6) her angeordnet sind, und wobei das System im wesentlichen folgende Bedingungen erfüllt:

$f = 287,69$ $f_p/f_v = 4,49$

$L/f = 0,28$ $f/r_{10} = -0,39$

| | | | | |
|---|---|---|---|---|
| | $r_1 = \infty$ | $r_1' = 21,193$ | $d_1 = 4,00$ | $n_1 = 1,76530$ |
| | $r_2 = \infty$ | $r_2' = 17,851$ | $d_2 = 5,00$ | |
| erste Bünde- | $r_3 = \infty$ | $r_3' = 41,662$ | $d_3 = 3,72$ | $n_2 = 1,76530$ |
| lungsvorrich- | $r_4 = \infty$ | $r_4' = \infty$ | $d_4 = 65,06$ | |
| tung | | | | |
| Ablenkoberfläche | $r_5 = \infty$ | $r_5' = \infty$ | $d_5 = 20,48$ | |
| | $r_6 = -65,855$ | $r_6' = -65,855$ | $d_6 = 22,11$ | $n_3 = 1,78506$ |
| | $r_7 = -82,458$ | $r_7' = -82,458$ | $d_7 = 0,00$ | |
| zweite Bünde- | $r_8 = 11290,889$ | $r_8' = 11290,889$ | $d_8 = 9,89$ | $n_4 = 1,78506$ |
| lungsvorrich- | $r_9 = -1046,936$ | $r_9' = -1046,936$ | $d_9 = 34,50$ | |
| tung | $r_{10} = -746,887$ | $r_{10}' = -78,225$ | $d_{10} = 15,00$ | $n_5 = 1,78506$ |
| | $r_{11} = -192,977$ | $r_{11}' = -36,101$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen allen Zwei aneinandergrenzenden Oberflächen in der Reihenfolge von dem Lichtquellenende darstellt; und $n_1$ bis $n_5$ einen Brechungsindex bei einer Wellenlänge von 790nm jeder der Linsen in der Reihenfolge von dem Lichtquellenende darstellt.

**17.** System nach Anspruch 1 mit einem Aperturverhältnis in einer Ebene parallel zur Abtastrichtung von 1:50, einem Aperturverhältnis in der Ebene senkrecht zur Abtastrichtung von 1:50 und einem Ablenkhalbwinkel von 30°, wobei die erste Linsengruppe (5) erste (13) und zweite (14) Linsen umfaßt, die in dieser Reihenfolge von dem Lichtquellenende (17) her angeordnet sind und die zweite Linsengruppe (11) dritte (8), vierte (9) und fünfte (10) Linsen umfaßt, die in dieser Reihenfolge von der Ablenkoberfläche (6) her angeordnet sind, und wobei das System im wesentlichen folgende Bedingungen erfüllt:

$f = 287{,}66$ $\quad f_p/f_v = 4{,}35$

$L/f = 0{,}30$ $\quad f/r_{10} = 0$

| | | | | |
|---|---|---|---|---|
| | $r_1 = \infty$ | $r_1' = 21{,}004$ | $d_1 = 4{,}00$ | $n_1 = 1{,}76530$ |
| | $r_2 = \infty$ | $r_2' = 17{,}845$ | $d_2 = 5{,}00$ | |
| erste Bündelungsvorrichtung | $r_3 = \infty$ | $r_3' = 45{,}422$ | $d_3 = 3{,}72$ | $n_2 = 1{,}76530$ |
| | $r_4 = \infty$ | $r_4' = \infty$ | $d_4 = 70{,}73$ | |
| Ablenkoberfläche | $r_5 = \infty$ | $r_5' = \infty$ | $d_5 = 20{,}48$ | |
| | $r_6 = -68{,}363$ | $r_6' = -68{,}363$ | $d_6 = 16{,}61$ | $n_3 = 1{,}78506$ |
| | $r_7 = -77{,}695$ | $r_7' = -77{,}695$ | $d_7 = 0{,}00$ | |
| zweite Bündelungsvorrichtung | $r_8 = 11425{,}394$ | $r_8' = 11425{,}394$ | $d_8 = 17{,}01$ | $n_4 = 1{,}78506$ |
| | $r_9 = -8531{,}994$ | $r_9' = -8531{,}994$ | $d_9 = 35{,}96$ | |
| | $r_{10} = \infty$ | $r_{10}' = -89{,}050$ | $d_{10} = 16{,}53$ | $n_5 = 1{,}67450$ |
| | $r_{11} = -208{,}951$ | $r_{11}' = -34{,}131$ | | |

wobei f eine Brennweite des Systems bezüglich der Brechung in einer Ebene parallel zur Abtastrichtung darstellt; $f_p$ eine Brennweite der zweiten Linsengruppe (11) bezüglich der Brechung in der Ebene parallel zur Abtastrichtung darstellt; $f_v$ eine Brennweite der zweiten Linsengruppe bezüglich der Brechung in der Ebene senkrecht zur Abtastrichtung darstellt; L eine Länge der zweiten Linsengruppe (11) darstellt; $r_1$ bis $r_{11}$ einen Krümmungsradius bezüglich der Brechung in der Ebene parallel zur Abtastrichtung jeder der Oberflächen in der Reihenfolge von dem Lichtquellenende darstellt; $r_1'$ bis $r_{11}'$ einen Krümmungsradius bezüglich der Brechung in der Ebene senkrecht zur Abtastrichtung jeder der Oberflächen in der Reihenfolge von dem Lichtquellenende darstellt; $d_1$ bis $d_{10}$ eine Abstand zwischen allen zwei aneinandergrenzenden Oberflächen in der Reihenfolge von dem Lichtquellenende darstellt; und $n_1$ bis $n_5$ einen Brechungsindex bei einer Wellenlänge von 790nm jeder der Linsen in der Reihenfolge von dem Lichtquellenende darstellt.

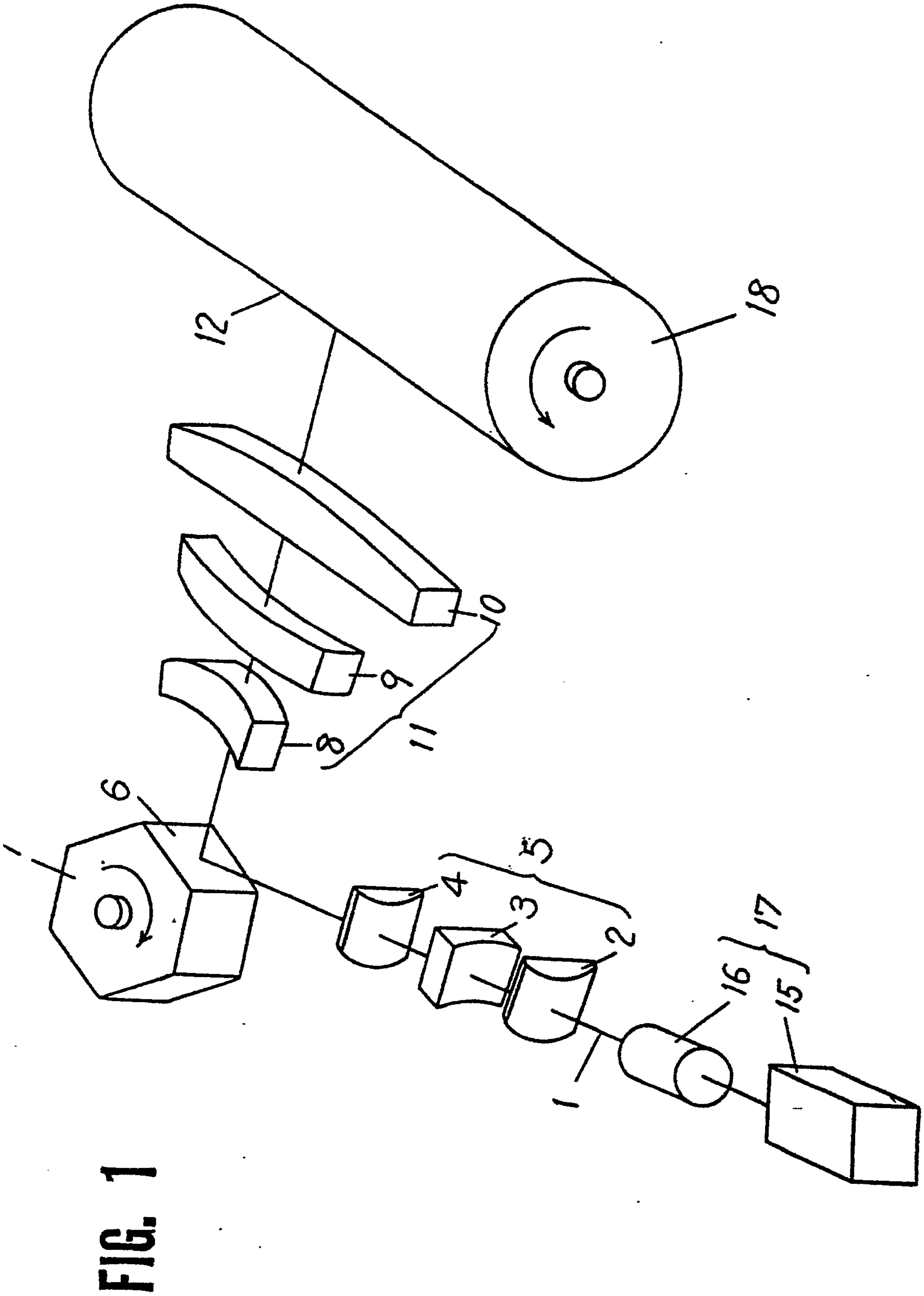


FIG. 1

FIG. 2

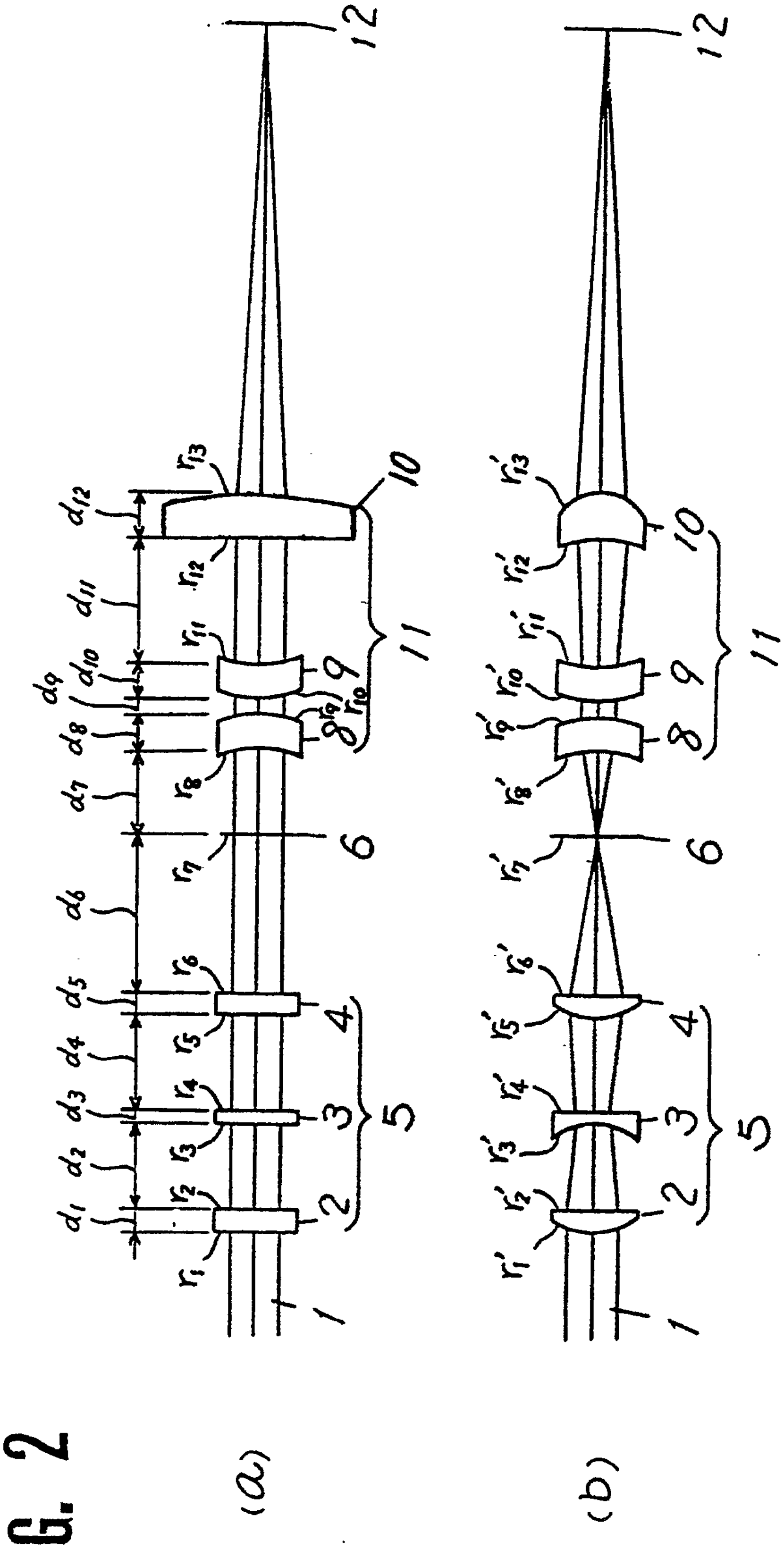
(a)
(b)
1
2
3
4
5
6
8
9
10
11
12
$r_1$ $r_2$ $r_3$ $r_4$ $r_5$ $r_6$ $r_7$ $r_8$ $r_9$ $r_{10}$ $r_{11}$ $r_{12}$ $r_{13}$
$d_1$ $d_2$ $d_3$ $d_4$ $d_5$ $d_6$ $d_7$ $d_8$ $d_9$ $d_{10}$ $d_{11}$ $d_{12}$
$r'_1$ $r'_2$ $r'_3$ $r'_4$ $r'_5$ $r'_6$ $r'_7$ $r'_8$ $r'_9$ $r'_{10}$ $r'_{11}$ $r'_{12}$ $r'_{13}$

FIG. 3

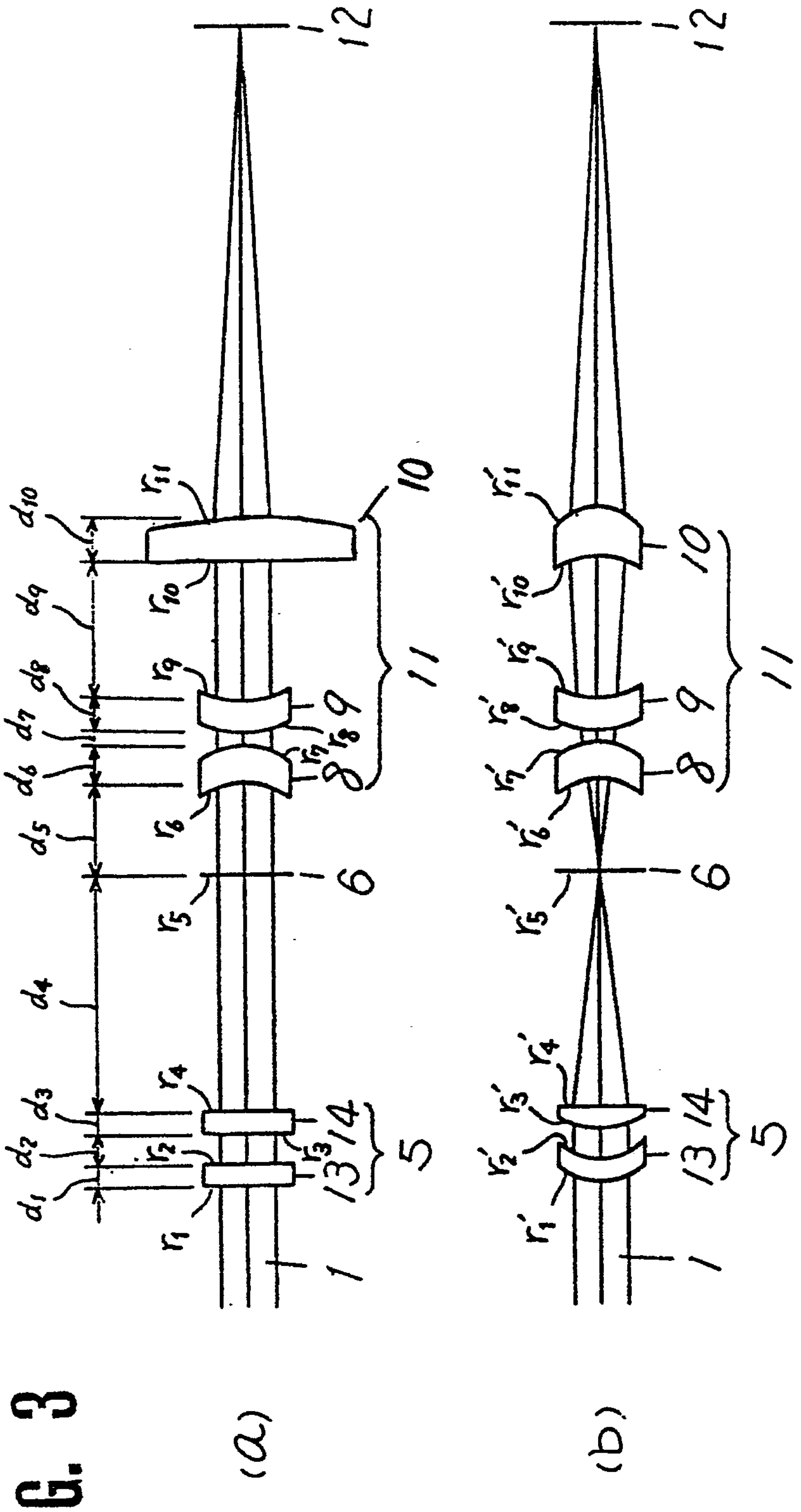
(a)
(b)
1
5
6
8
9
10
11
12
13
14
d1
d2
d3
d4
d5
d6
d7
d8
d9
d10
r1
r2
r3
r4
r5
r6
r7
r8
r9
r10
r11

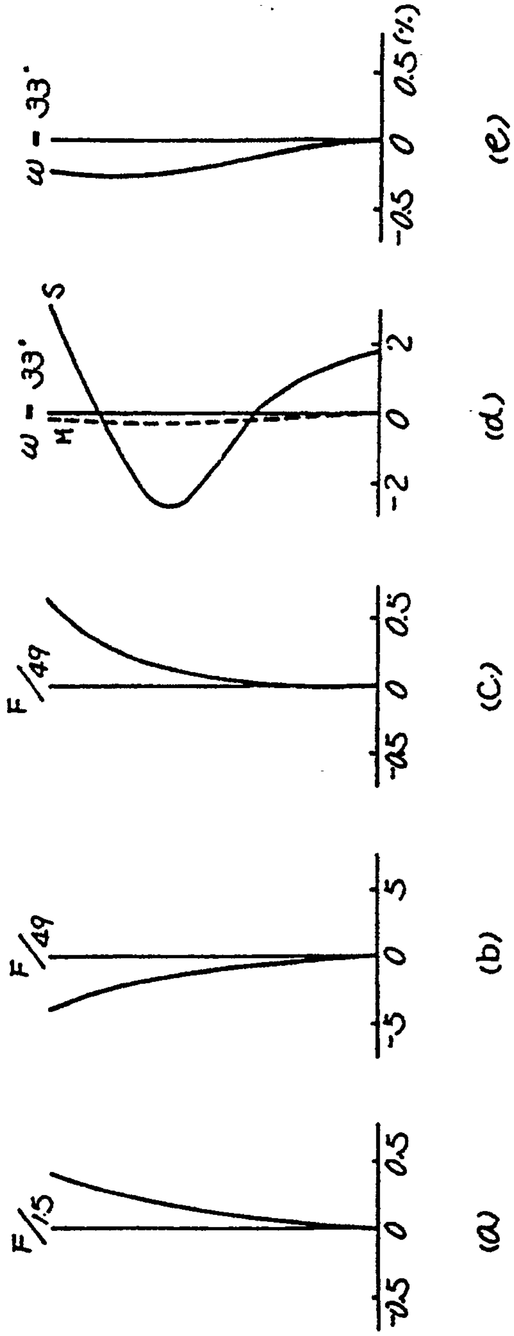
F/1.5
-0.5
0
0.5
(a)
F/4.9
-5
0
5
(b)
F/4.9
-0.5
0
0.5
(c)
ω = 33°
M
S
-2
0
2
(d)
ω = 33°
-0.5
0
0.5 (%)
(e)

FIG. 4

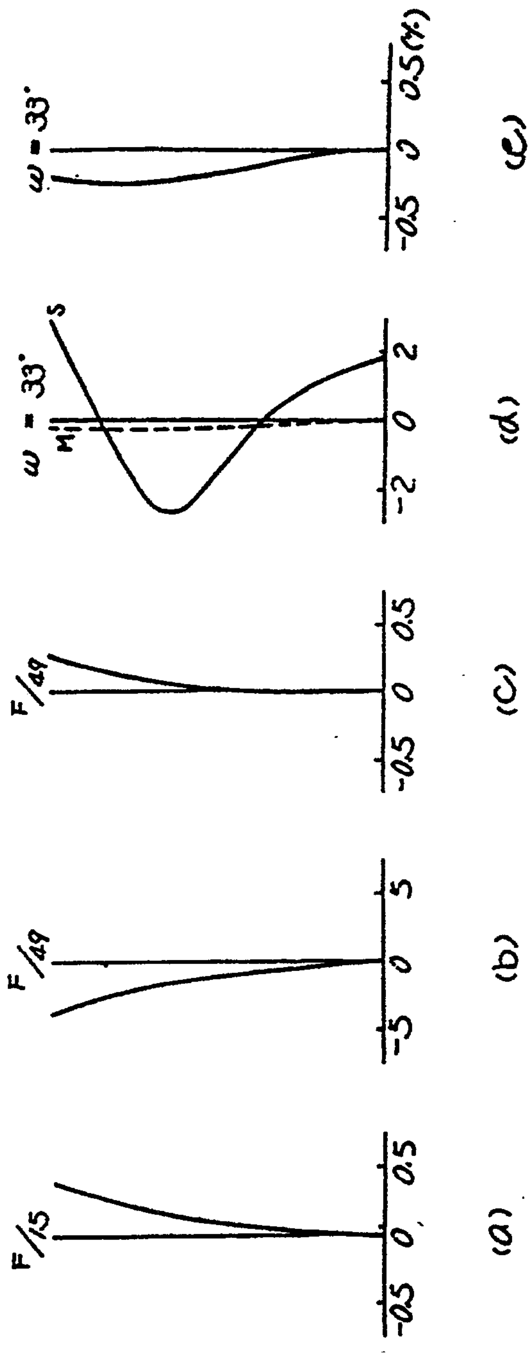
F/1.5
-0.5
0
0.5
(a)
F/4.9
-5
0
5
(b)
F/4.9
-0.5
0
0.5
(c)
ω = 33°
M
S
-2
0
2
(d)
ω = 33°
-0.5
0
0.5 (%)
(e)

FIG. 5

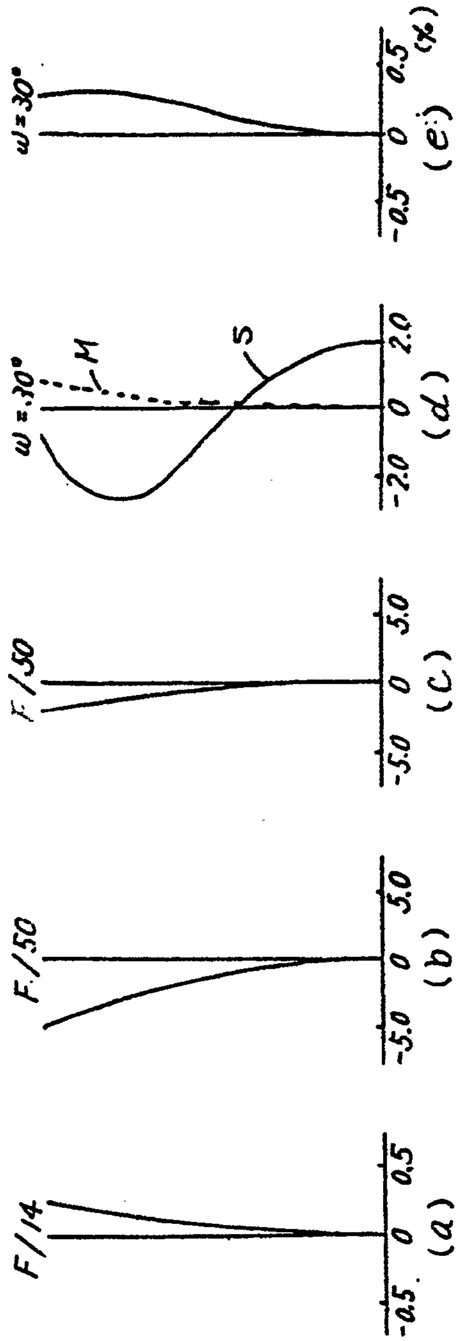
F/14
-0.5
0
0.5
(a)
F/50
-5.0
0
5.0
(b)
F/50
-5.0
0
5.0
(c)
ω = 30°
M
S
-2.0
0
2.0
(d)
ω = 30°
-0.5
0
0.5
(e)
(%)

FIG. 6

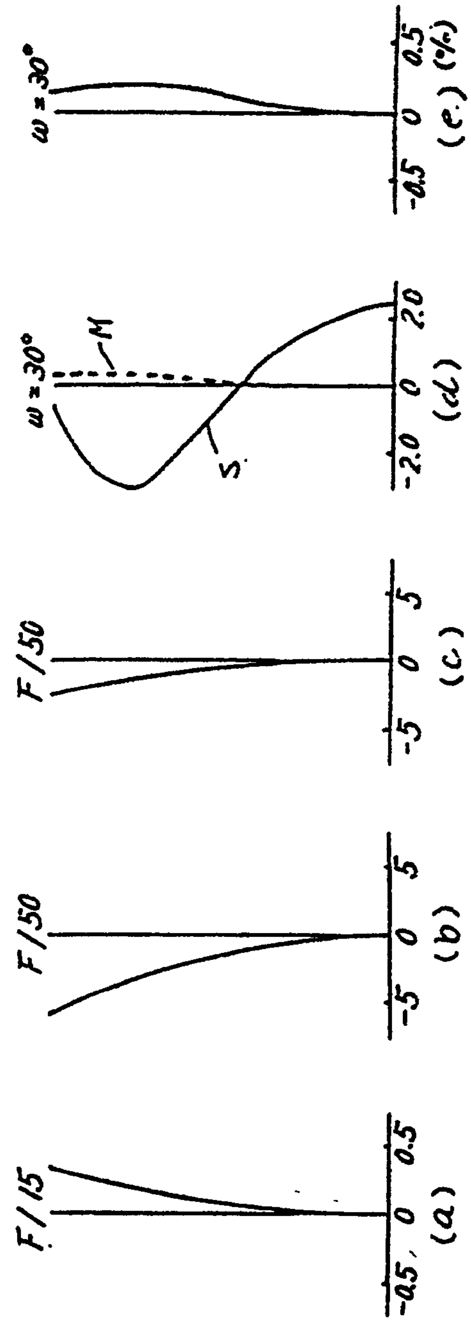
F/15
-0.5
0
0.5
(a)
F/50
-5
0
5
(b)
F/50
-5
0
5
(c)
ω = 30°
M
S
-2.0
0
2.0
(d)
ω = 30°
-0.5
0
0.5
(e)
(%)

FIG. 7

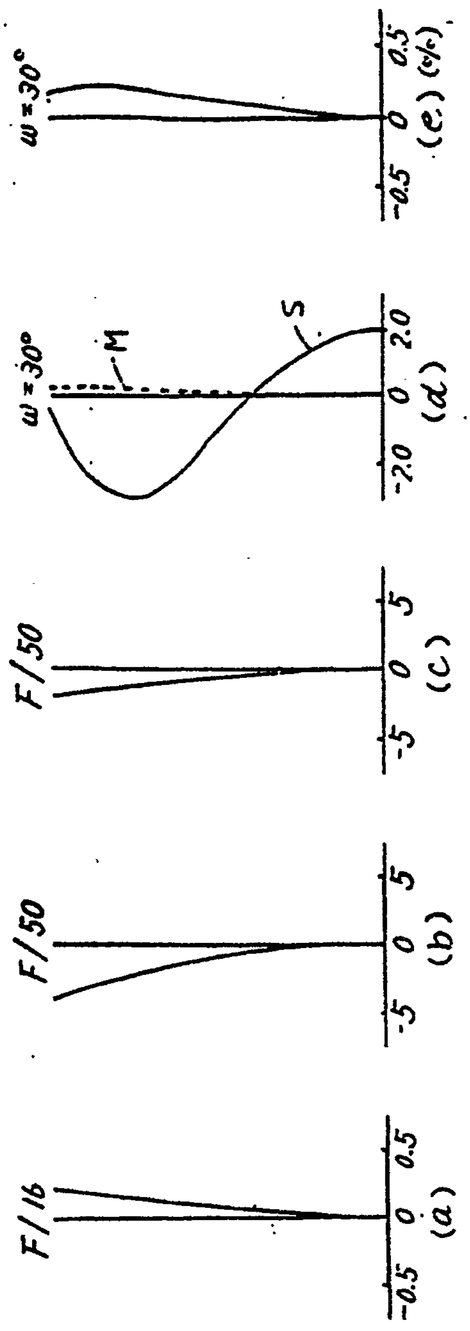
F/16
-0.5 0 0.5
(a)
F/50
-5 0 5
(b)
F/50
-5 0 5
(c)
ω = 30°
M
S
-2.0 0 2.0
(d)
ω = 30°
-0.5 0 0.5
(e) (%)

FIG. 8

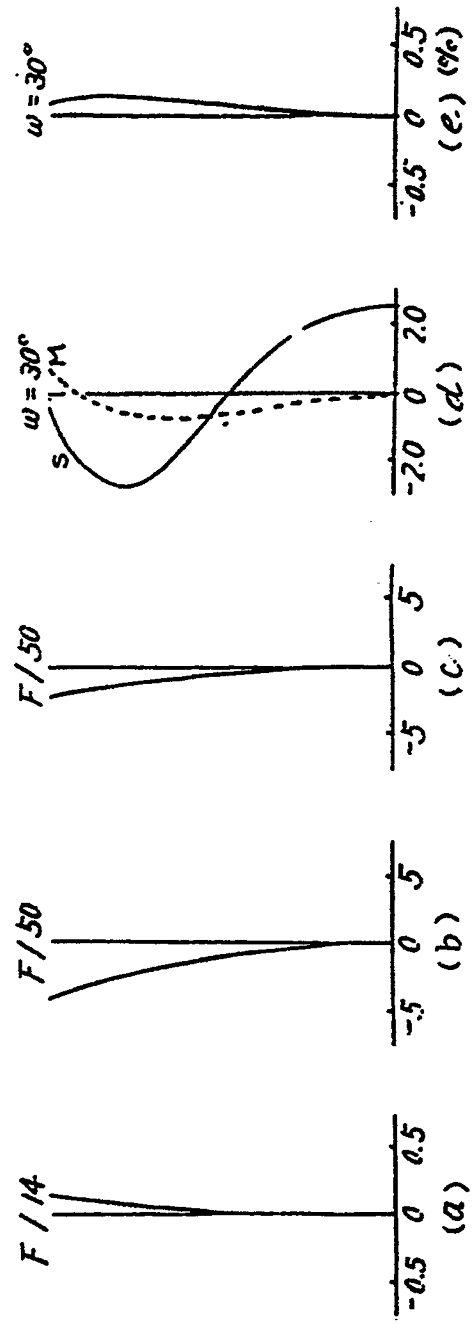
F/14
-0.5 0 0.5
(a)
F/50
-5 0 5
(b)
F/50
-5 0 5
(c)
ω = 30°
M
S
-2.0 0 2.0
(d)
ω = 30°
-0.5 0 0.5
(e) (%)

FIG. 9

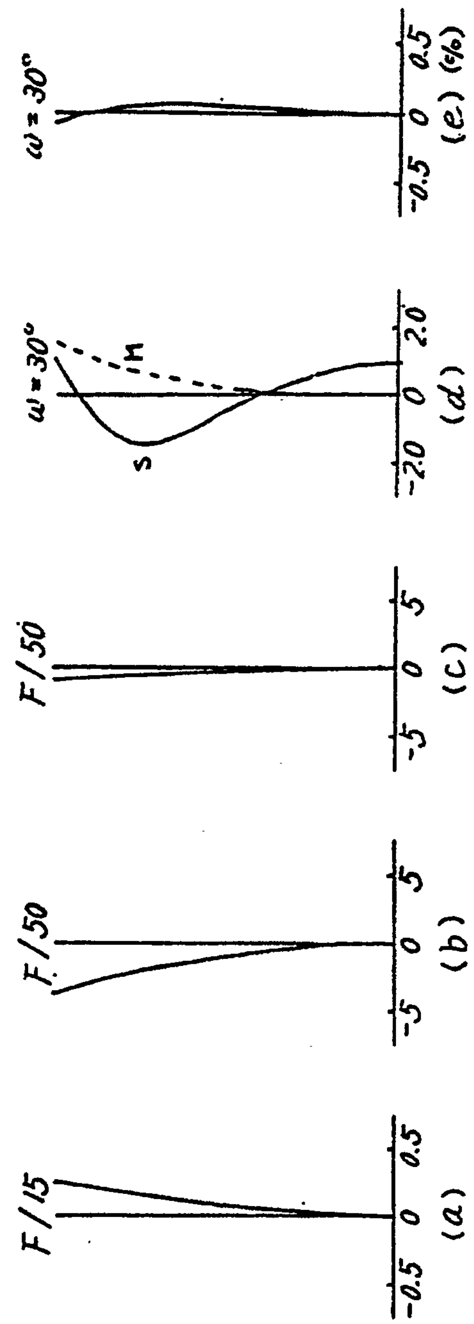
F/15
-0.5 0 0.5
(a)
F/50
-5 0 5
(b)
F/50
-5 0 5
(c)
ω=30°
S
M
-2.0 0 2.0
(d)
ω=30°
-0.5 0 0.5
(e) (%)

FIG.10

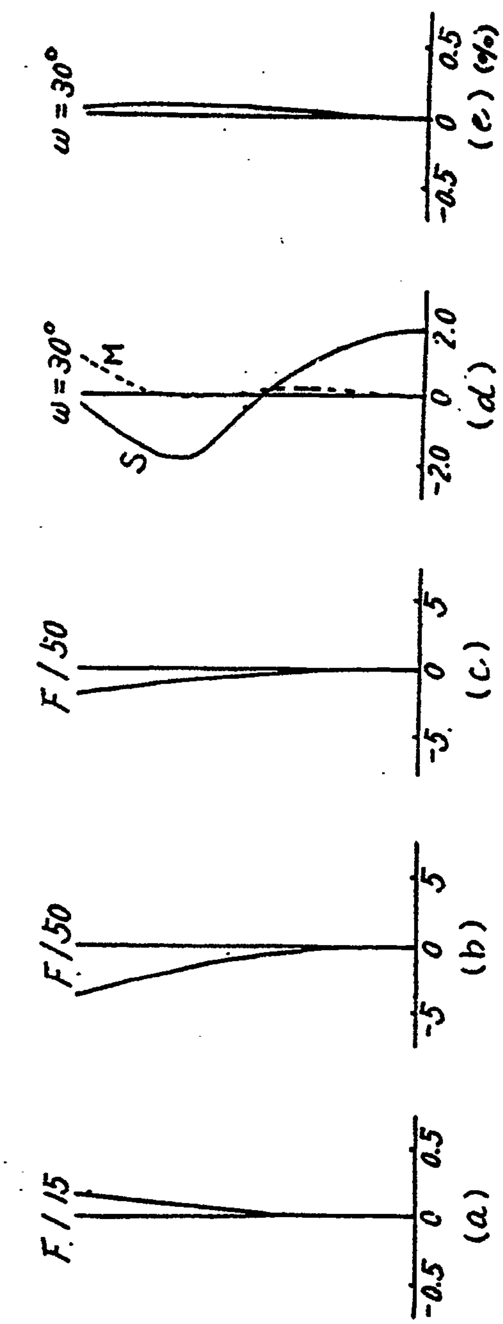
F/15
-0.5 0 0.5
(a)
F/50
-5 0 5
(b)
F/50
-5 0 5
(c)
ω=30°
S
M
-2.0 0 2.0
(d)
ω=30°
-0.5 0 0.5
(e) (%)

FIG.11

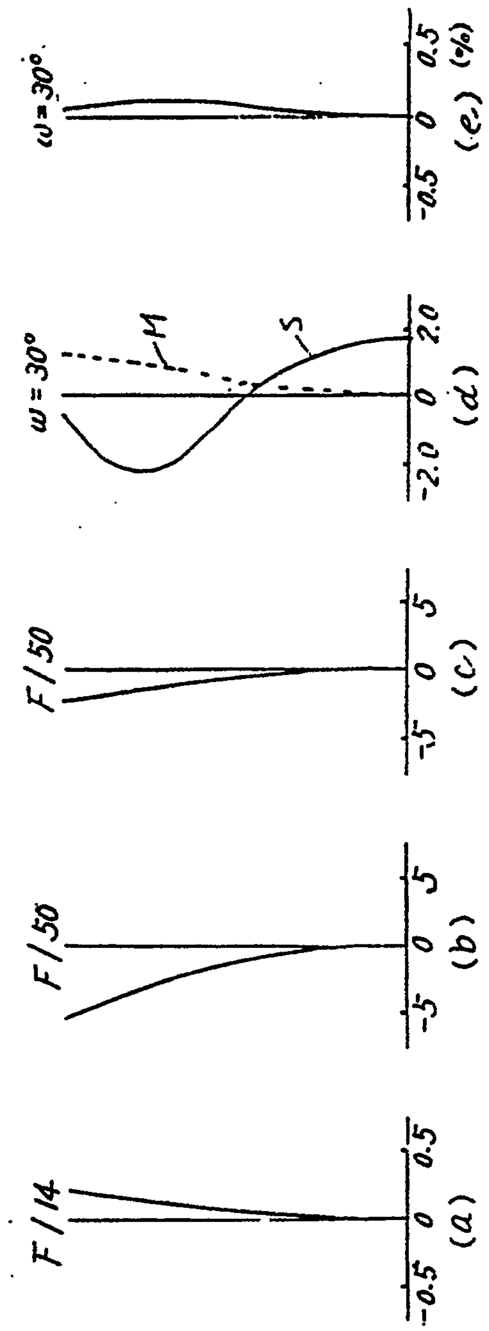
F/14
-0.5 0 0.5
(a)
F/50
-5 0 5
(b)
F/50
-5 0 5
(c)
ω = 30°
M
S
-2.0 0 2.0
(d)
ω = 30°
-0.5 0 0.5 (%)
(e)

FIG.12

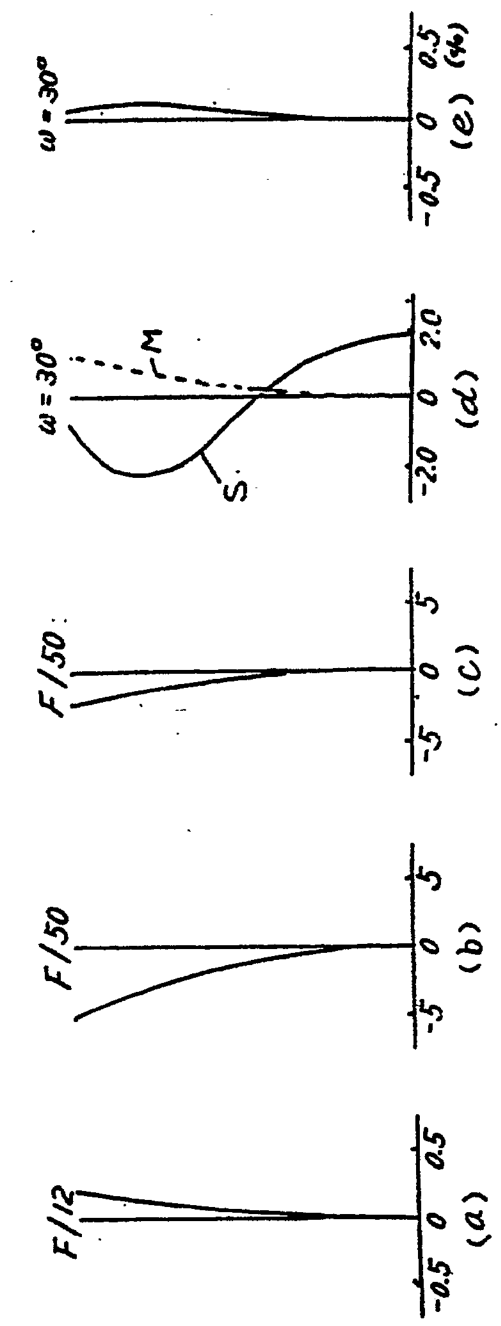
F/12
-0.5 0 0.5
(a)
F/50
-5 0 5
(b)
F/50
-5 0 5
(c)
ω = 30°
M
S
-2.0 0 2.0
(d)
ω = 30°
-0.5 0 0.5 (%)
(e)

FIG.13

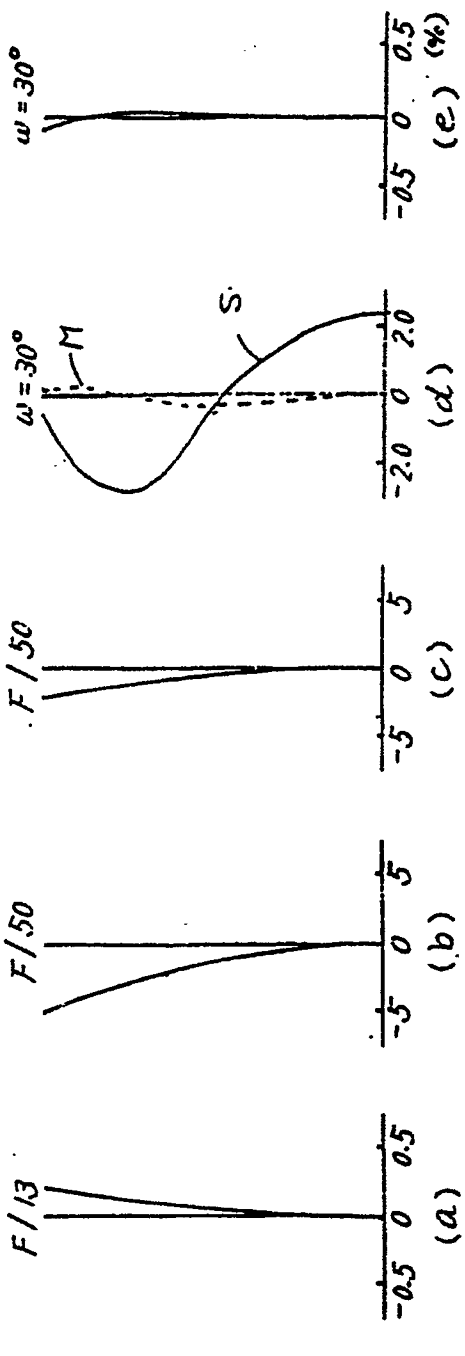


FIG.14